# EUROPEAN PATENT APPLICATION

(11) **EP 1 884 947 A2**
(43) Date of publication of application: **06.02.2008**
(21) Application number: 07007725.0
(22) Date of filing: 16.04.2007
(51) Int. Cl.: G11B 23/00

(54) **Disk media and disk media manufacturing method**

(30) Priority: 03.08.2006 JP 2006211804
(71) Applicant: Hitachi, Ltd., Chiyoda-ku Tokyo 100-8220 (JP)
(72) Inventor: Sakama, Isao, Chiyoda-ku Tokyo 100-8220 (JP); Ashizawa, Minoru, Chiyoda-ku Tokyo 100-8220 (JP)
(74) Representative: Strehl Schübel-Hopf & Partner

(57) **Abstract**

A disk media (1A) has an IC chip (5) which is mounted thereon at a boundary peripheral portion of a metal film layer formation region (4) with respect to a metal film layer non-formation region (3). The IC chip (5) is mounted on a top surface of the metal film layer (4a). An "L"-shaped slit (6A) is formed in the metal film layer (4a) at the mount position of the IC chip (5) while causing signal input/output electrodes (5a, 5b) of IC chip (5) to be connected to portions of the metal film layer (4a) which are placed on the opposite sides of the slit (6A). With such an arrangement, it is possible to use the metal film layer (4a) as an antenna of IC chip (5) while enabling the impedance of IC chip (5) to match the impedance of the antenna formed by the metal film layer (4a).

## Description

### BACKGROUND OF THE INVENTION

### Field of the Invention

The present invention relates generally to disk media, such as a compact disc (CD), digital versatile disk (DVD) or equivalents thereto, with an information-storing integrated circuit (IC) chip or a radio frequency identification (RFID) tag being mounted thereon. This invention also relates to methodology of manufacturing the disk media.

### Description of the Related Art

In recent years, RFID tags are widely utilized in the form that these are attached to articles and IC cards for use in product information management. Such RFID tag is typically made up of an IC chip and an antenna. Information such as identification (ID) data being stored in the IC chip is communicable by RF waves over the air with its associated reader/writer, so it is possible to read the data stored in the IC chip by the reader/writer in a non-contact way or, adversely, write it into the IC chip.

JP-A-2005-209323 discloses, at its paragraph numbers "0021" to "0024" and Fig. 1, a disk media of the RFID tag mount type having a built-in RFID tag that is mounted on an optical disk or disc, such as any one of CD and DVD (these will be collectively called the "disk media" hereinafter), in its clamp area which is a metal film layer non-formation region of a prespecified radial directional outside region of a center hole of the disk media. The RFID tag-mounted disk media as taught by JP-A-2005-209323 is arranged so that the RFID tag having an IC chip and a loop antenna is buried or "embedded" in a resin substrate of the clamp region or, alternatively, is mounted on a top surface of the resin substrate.

Further, a seal-like fabricated inlet having an IC chip on or above a dipole antenna has also been put into practical use. Such inlet is mountable on a disk media.

In the disk media of the type stated above, the built-in loop antenna of RFID tag is circumferentially wound several turns in the clamp region in order to enhance the emission intensity of electromagnetic waves to thereby extend the communicable distance. Due to this, the RFID tag is large in size to an extent that it is slightly smaller than the clamp region. In addition, in the case of RFID tag using the dipole antenna, the dipole antenna that is built in an inlet is designed to have a length of λ/2, where λ is the wavelength of a radio wave to be used for communications in order to retain a predetermined wave power and secure the communication distance required. An example is that when the radio frequency is set at 2.45GHz, the length of the dipole antenna is about 52mm. Another example is that when the radiofrequency is set at 950MHz, the length of dipole antenna is about 150mm. As apparent from these examples, the inlet is relatively large in dimension.

Usually the clamp region near or around the center hole of a disk media such as CD or DVD is under requirements for physical strength and surface flatness in order to permit a disk drive device to clamp the disk media. However, simply burying the large RFID tag and/or the inlet in resin material of the clamp region would result in a decrease in physical strength at such part.

On the other hand, when the large RFID tag or inlet is mounted on the disk surface in its clamp region, the flatness of the clamp region is deteriorated, resulting in a likewise decrease in clamping force of the disk media to the disk drive device. Further, when the large RFID tag or inlet is mounted on the disk surface of the clamp region, the clamp part of the clamp region becomes thicker. This sometimes results in the lack of an ability to clamp the disk media by use of the currently available disk drive device.

### SUMMARY OF THE INVENTION

The present invention has been made in view of the above-stated problems, and its object is to provide a disk media having a built-in IC chip with radio wave-sensitive operability, which is capable of avoiding the use of an additional antenna or reducing this antenna in size.

The disk media of this invention has been contrived in order to attain the foregoing object.

To this end, the disk media of this invention is a disk media which has a built-in IC chip operable by radio waves and which is characterized by comprising a metal film layer that is formed on the disk media for making up an antenna of the IC chip, wherein the metal film layer includes an impedance matching circuit for matching the impedance of the antenna and the impedance of the IC chip.

In accordance with another aspect of this invention, the disk media has a small-size inlet which includes a small-size antenna having a slit for impedance matching of the IC chip at a metal film layer non-formation part at which the metal film layer is not formed while causing a predetermined portion or portions of the small-size antenna to be connected to the metal film layer either by electrical interconnection or by electrostatic capacitive coupling.

According to this invention, it is possible to provide the IC chip-mounted disk media with radiowave-sensitive operability which is capable of eliminating the use of the additional antenna or downsizing this antenna.

Other objects, features and advantages of the invention will become apparent from the following more particular description of the embodiments of the invention, as illustrated in the accompanying drawings.

### BRIEF DESCRIPTION OF THE DRAWINGS

Fig. 1 is a diagram schematically showing an overall structure of a disk media in accordance with a first embodiment of the present invention, wherein part (a) of Fig. 1 is an upper plan view, (b) is a plan view of an IC chip on its signal input/output electrode side, (c) is an enlarged partial top plan view of a portion A₁ with an IC chip of (a) being excluded, (d) is an enlarged top view of the portion A₁, and (e) is an enlarged cross-sectional view as taken along line X₁-X₁ in (d).
Fig. 2 schematically shows a structure of a T-shaped slit, wherein part (a) is an enlarged top plan view of a T-shaped slit, and (b) is an enlarged top view of the T-shaped slit after an IC chip is mounted.
Fig. 3 schematically shows a structure of a disk media which is a modified example of the first embodiment, wherein part (a) is a top plan view, (b) is an enlarged top view of a portion A₂ in (a), and (c) is an enlarged sectional view along line X₂-X₂ in (b).
Fig. 4 is a diagram showing the shapes of a recess for mounting therein an IC chip and a groove for forming a slit in the modification of the first embodiment, wherein (a) is a plan view of the groove and recess of Fig. 2, (b) is a plan view of a shape-changed example of (a), (c) is a sectional view along line B₁-B₁ of (b), (d) is a B₂-B₂ sectional view, (e) is an E₁-E₁ sectional view, (f) is an E₂-E₂ sectional view, and (g) is a plan view of an example of T-like slit.
Fig. 5 is a diagram schematically showing a process of forming a slit by anisotropic deposition, wherein (a) and (b) show the slit that is formed in a recess with slanted side faces whereas (c) and (d) show the slit that is formed in a recess with a vertical wall being provided at one of sidefaces.
Fig. 6 is a diagram schematically showing a structure of a disk media of a second embodiment of this invention, wherein (a) is its top plan view, (b) is a plan view of a small-size inlet, and (c) is an enlarged sectional view taken along line Y₁-Y₁ in (a).
Fig. 7 is a diagram schematically showing a structure of a disk media of a modification of the second embodiment, wherein (a) is its top plan view, (b) is an enlarged sectional view taken along line X₃-X₃ in (a), and (c) is an enlarged sectional view along line Y₂-Y₂ of (a).
Fig. 8 is a diagram schematically showing a structure of a disk media of a third embodiment of the invention, wherein (a) is its top plan view, (b) is a plan view of a small-size inlet, and (c) is an enlarged perspective view of main part in (a).
Fig. 9 is a diagram schematically showing a structure of a disk media of a first modification of the third embodiment, wherein (a) is a top plan view, (b) is an enlarged sectional view taken along line X₄-X₄ in (a), and (c) is an enlarged sectional view along line Y₃-Y₃ of (a).
Fig. 10 is a diagram schematically showing a structure of a disk media of a second modification of the third embodiment, wherein (a) is a partial top perspective view, and (b) is an enlarged sectional view taken along line Y₄-Y₄ in (a).
Fig. 11 is a plan view of a modification of the small-size inlet, wherein (a) is a plan view of a modification of the layout of a slit of deckle-edged or "eared" small-size inlet, and (b) is a plan view of a modified layout of an "earless" small-size inlet.
Fig. 12 shows structures of a modification of the small-size inlet and a disk media which mounts it thereon, wherein (a) is a plan view of a small-size inlet of the straight line type, and (b) is a top plan view of a disk media with the straight type small-size inlet being mounted thereon.
Fig. 13 depicts a modification of small-size inlet and a disk media which mounts it thereon, wherein (a) is a plan view of an "L"-shaped small-size inlet, and (b) is a top plan view of a disk media with the L-shaped small-size inlet mounted thereon.
Fig. 14 shows a disk media with a small-size inlet-mounted tag-added pasting seal being adhered thereto, wherein (a) shows a target original or "raw" disk in a state prior to pasting of the tag-added seal thereto, and (b) is a top plan view of the disk media after having adhered the tag-added seal thereto.
Fig. 15 shows a tag-added pasting seal, wherein (a) is a plan view of the tag-added seal, and (b) is an enlarged sectional view along line Y₅-Y₅ in (a).
Fig. 16 shows a structure of an IC chip-mounted single-sided DVD with two disks bonded together in accordance with a fourth embodiment of the invention, wherein (a) is a sectional view of the single-sided DVD, (b) is a top plan view of first disk, and (c) is a bottom plan view of second disk.
Fig. 17 depicts, in cross-section, an IC chip-mounted part of the fourth embodiment, wherein (a) is an enlarged sectional view of the second disk in Fig. 16(c) as taken along line X₆-X₆, (b) is an enlarged sectional view of the first disk of Fig. 16(b) along line X₅-X₅, and (c) is a sectional view after having adhered them together.
Fig. 18 is a conceptual diagram showing a positioning device which performs position alignment of a couple of disks in DVD of this invention.
Fig. 19 is a flow chart showing a process for bonding together two disks, which is performed by the positioning device of Fig. 18.
Fig. 20 shows a small-size inlet-mounted single-sided DVD with two disks adhered together in a first modification of the fourth embodiment of this invention, wherein (a) is a top plan view of first disk, and (b) is a bottom view of second disk.
Fig. 21 shows an enlarged sectional view along line X₇-X₇, an enlarged X₈-X₈ sectional view, and a sectional view after bonding.
Fig. 22 illustrates, in cross-section, a small-size inlet-mounted single-sided DVD in a second modification of the fourth embodiment.
Fig. 23 depicts a double-sided DVD of a fifth embodiment, wherein (a) is a top plan view of first disk, and (b) is a bottom view of second disk.
Fig. 24 shows in cross-section the double-sided DVD of the fifth embodiment on which an IC chip is mounted, wherein (a) is an enlarged sectional view of second disk along line X₁₀-X₁₀ prior to bonding, (b) is an enlarged sectional view of first disk along line X₉-X₉ prior to bonding, and (c) is a sectional view after bonding.

### DESCRIPTION OF THE EMBODIMENTS

Although IC chip-mounted disk media structures in accordance with the modes carrying out the present invention (referred to hereinafter as embodiments) will be described while using preferred examples thereof with reference to the accompanying figures of the drawing below, the overview of a disk media of one embodiment will first be explained below to facilitate understanding of the principal concepts of this invention.

Note here that the disk media may refer to a compact disc (CD), a digital versatile disk (DVD) or equivalents thereof.

### « Overview of Embodiments»

A disk media embodying the invention is arranged to mount thereon an IC chip (in first embodiment) or, alternatively, to mount a small-size inlet having an IC chip with an antenna attached thereto (second embodiment), for using an on-disk formed metal film layer as an antenna of either the IC chip or the small-size inlet.

It should be noted that the antenna to be included in the small-size inlet is a small-size antenna with an impedance-matching slit being formed therein, which is shorter than the antenna length equivalent to one-half (1/2) the wavelength that is required in the case of a dipole antenna. Using this small-size antenna is not for achievement of a predetermined communication distance but for constitution of an antenna which secures the predetermined communication distance together with a metal film layer which is formed on the disk.

The IC chip is mountable in a metal film layer formation region of the disk media. The small-size inlet is mountable in any one of the metal film layer formation region and a metal film layer non-formation region.

In the case of the IC chip being mounted in the metal film layer formation region, an impedance-matching slit is formed at a part of the metal film layer at which the IC chip is mounted, for electrical connection with the metal film layer.

In case the small-size inlet is mounted at a metal film layer non-formation portion of the disk media, electrical connection or electrostatic capacitive coupling is used to connect between a prespecified portion of the small-size antenna of the small-size inlet and the metal film layer for use as the antenna. In case the small-size inlet is mounted in the metal film layer formation region of the disk media, the small-size inlet's main part is amounted at a non-formation portion from which a metal film is removed or at which the metal film is not formed, while connecting between a predetermined portion of the small-size antenna and a part of the metal film layer for use as the antenna by means of electrical connection or electrostatic capacitive coupling..

Using the metal film layer as the antenna causes the metal film layer having a sufficiently large area to function as the antenna of IC chip or small-size inlet. Thus it is possible to obtain signal transmission with increased radiowave intensity and/or superior wave reception sensitivity. This makes it possible to establish excellent communication distance.

In cases where the small-size inlet is connected to the metal film layer while using the metal film layer as an antenna main body, the intended communication distance is achievable by an antenna that is realized by such metal film layer. Accordingly, the small-size inlet may be arranged to mount a small-size antenna with its length equivalent to 0.1 λ, where λ is the wavelength of a radiowave used, so it is possible to minimize the inlet in dimensions. This results in a likewise decrease in area of the small-size inlet.
Even when burying the small-size inlet inside of a resin substrate in the clamp region or mounting it on a surface thereof, it hardly happens that the physical strength and/or flatness of the clamp region is deteriorated.

In contrast, in the prior known RFID tag disclosed in JP-A-2005-209323, it is a must to provide the intended communication distance by either a loop antenna or a dipole antenna which is additionally provided to the RFID tag. In the case of the dipole antenna, a length of about λ/2 is required, where λ is the wavelength of a radiowave used; obviously, this results in RFID tag becoming larger in size. In the case of the loop antenna, it is a must to wind the antenna several turns into a loop form so that RFID tag also becomes larger. Accordingly, when an attempt is made to embed or mount such large RFID tag in the clamp region, the clamp region can decrease in physical strength or flatness thereof.

### «First Embodiment»

Several embodiments will be explained in detail while referring to the accompanying drawings below.

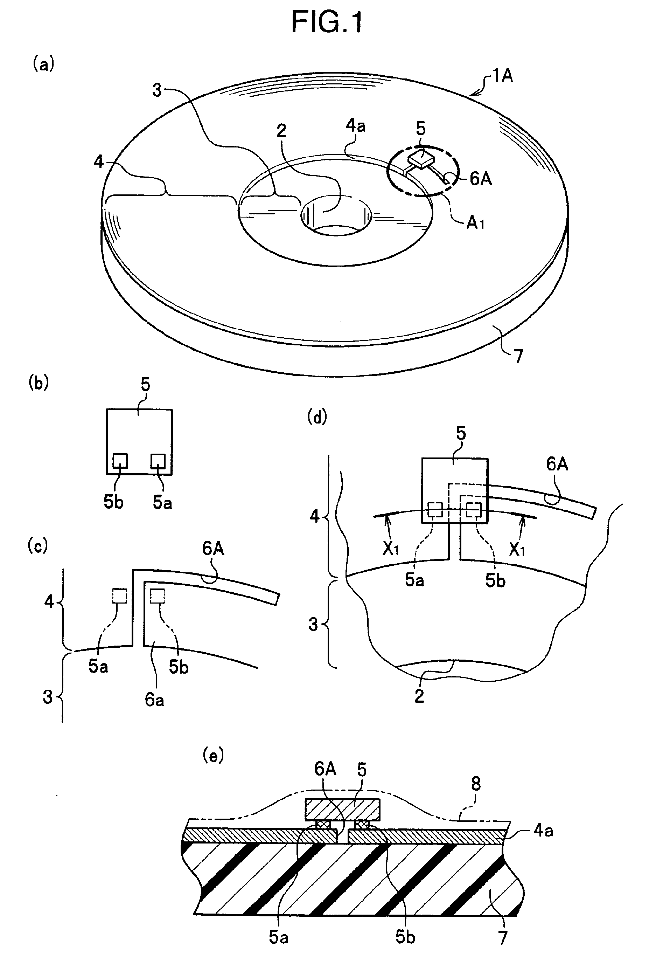

An explanation will first be given of a disk media of a first embodiment with reference to Fig. 1. Part (a) of Fig. 1 is a top perspective view of an overall structure of a disk media of this embodiment; (b) is a diagram showing signal input/output electrodes each of which is a terminal for power supply to an antenna of IC chip used in RFID tag; (c) is an enlarged top plan view of only a slit of a disk portion A₁ in (a); (d) is an enlarged top plan view of the portion A₁ in (a); and, (e) is an enlarged cross-sectional view as taken along line X₁-X₁ in (d).

As shown in Fig. 1(a), in a disk media 1A such as CD or else, a radial-direction outside area with a predetermined width from the outer periphery of a center hole 2 into which a rotatable spindle of a disk drive device (not shown) is inserted is defined as a clamp region for permitting the disk drive device to rotatably clamp the disk media 1A. An outside area in radial direction of the clamp region is a data recordable storage region, in which a metal film layer 4a is formed by sputtering a chosen metal, such as Au, Al or the like, to a thickness of about several tens of nanometer (nm), wherein the layer has its surface that is coated by a protective layer 8. In case the disk media 1A is a CD, its thickness is about 1.2mm.

In view of the fact that there is a case where the metal film layer 4a is formed in a region which includes the clamp region that is outside of the center hole 2 in the radial direction, a certain part in which the metal film layer 4a is not formed and which expands from the center direction toward the outside in the radial direction will here be called the metal film layer non-formation region 3 whereas a part in which the metal film layer 4a is formed is called the metal film layer formation region 4 regardless of the boundary between the clamp region and the recording area. The clamp region as generally called is the metal film layer non-formation region 3 in some cases, and in other cases it may include both the metal film layer non-formation region 3 and part of inner circumferential side of the metal film layer formation region 4.

As shown in Fig. 1(c), an almost "L"-shaped slit 6A is formed in the metal film layer 4a in close proximity to the inner circumferential portion of the metal film layer formation region 4 of disk media 1A at a stage prior to the formation of the protective layer 8. As shown in Fig. 1(d), an IC chip 5 is mounted while spanning or "bridging" the slit 6A in such a manner that the signal input/output electrodes 5a and 5b for use as the terminals for power supply to the antenna of IC chip 5 correspond to positions 5a-5b indicated by virtual lines on the metal film layer 4a at a corner of L-like shape of the slit 6A.

The signal input/output electrodes 5a-5b are structured, for example, from Au-made pads for contacting together the metal film layer 4a and signal input/output electrode 5a, 5b by either ultrasonic bonding or eutectic metal junction as an example. Alternatively, it is also permissible to connect the signal input/output electrode 5a, 5b and metal film layer 4a together via an anisotropic conductive film. Then, after having mounted the IC chip 5 on the surface of metal film layer 4a, the metal film layer 4a's surface is coated with the protective layer 8.

The slit 6A is formed to define a groove with its planar shape resembling the letter "L" owing to the masking during fabrication of the time the metal film layer 4a. By the presence of this slit 6A, electrical connection is lost between portions of the metal film layer 4a in the width direction of slit 6A. One end of "L"-like shape of the slit 6A is formed to extend along the radius direction of disk media 1A to reach the metal film layer non-formation region 3. The other end of slit 6A is formed along the circumferential direction of disk media 1A so that it is terminated or "closed" in the metal film layer 4a by a prespecified length.

Note that a circular ring portion that includes the region for mounting the IC chip 5 by formation of the slit 6A is not used to store data, so it is desirable that the position within the metal film layer formation region 4 of the part for mounting the IC chip 5 by formation of the slit 6A is a portion adjacent to the metal film layer non-formation region 3. More preferably, it is a non-storage region as defined in technical standards of the disk media 1A and, at the same time, a non-clamp region.

By electrically connecting the signal input/output electrodes 5a-5b of IC chip 5 to regions of the metal film layer 4a which are placed at opposite sides of the slit 6A respectively, a portion of stub 6a which is created by the formation of slit 6A is serially connected between another portion of the metal film layer 4a which becomes the antenna and the IC chip 5. This portion of stub 6a functions as a series-connected inductor component. This inductor component cancels out a capacitive component within the IC chip 5 to thereby enable achievement of impedance matching between the metal film layer 4a and the IC chip 5. In other words, the IC chip 5 permits the metal film layer 4a with a sufficiently large area to act as the antenna while at the same time enabling establishment of the matching of the impedance of IC chip 5 and the impedance of the antenna thus formed by the metal film layer 4a. This slit 6A is called the impedance matching circuit.

Note here that the impedance matching between the IC chip 5 and the metal film layer 4a that becomes the antenna is determined by an area of the stub 6a which is determined by each length up to the L-shaped corner of the slit 6A.

Also note that when mounting the IC chip 5 on the surface of metal film layer 4a, a technique is employable for pasting it to the surface of metal film - layer 4a after having deposited an anisotropic conductive film on a pad surface of the signal input/output electrode 5a, 5b or on the metal film layer 4a corresponding to such portion.

### «Effects of First Embodiment»

According to this embodiment, the disk media 1A is able to use the metal film layer 4a as the antenna of IC chip 5, thereby enabling formation of the antenna with excellent sensitivity. And, as the metal film layer 4a is provided with the slit 6A for use as the impedance matching circuit, it is no longer required to make an extra or "special" impedance matching circuit on the IC chip 5 side. As a result, it is possible to reduce the area of an entirety of RFID tag using the IC chip 5. In addition, since the metal film layer 4a is used as the antenna without having to add any new members, there are no factors as to a cost increase for prior art IC chip-mounted disk media.

Additionally, as the metal film layer 4a covering a wide range becomes the antenna, it is possible to provide an extensive read/write area for reader/writer equipment.

It is noted that the planar shape of the slit 6A making up the impedance matching circuit should not exclusively be limited to the L-like shape and may alternatively be a T-like shape.

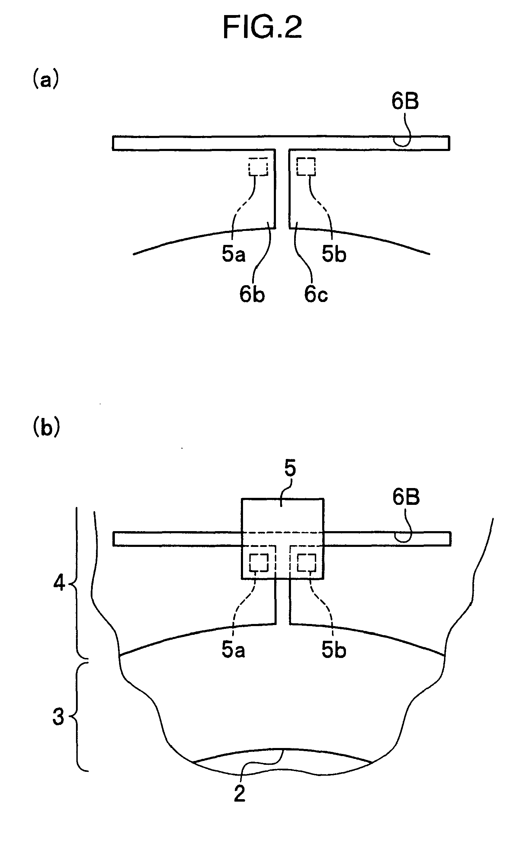

Fig. 2 is a diagram showing the disk media 1A having a T-shaped slit 6B which is formed at a peripheral portion of metal film layer formation region 4 at the boundary with the metal film layer non-formation region 3 so that the stem part of "T" is in an inward radial direction whereas the bar of "T" is in a circumferential direction. As shown in Fig. 2(a), the T-shaped slit 6B is formed in a metal film layer 4a near the inner circumferential portion of metal film layer formation region 4 of disk media 1A at a stage prior to the formation of a protective layer 8. This results in stubs 6b and 6c being formed. As shown in Fig. 2(b) an IC chip 5 is mounded to overlie or "bridge" the slit 6B in such a manner that signal input/output electrodes 5a-5b for use as terminals for power supply to an antenna of IC chip 5 are placed at positions 5a and 5b indicated by virtual lines on metal film layer 4a at corners of T-like shape of slit 6B while corresponding to the stubs 6b-6c respectively.

The formation of the slit 6A or slit 6B in this embodiment is realizable by masking a portion which becomes the slit 6A or slit 6B when forming by sputtering the metal film layer 4a on a resin substrate 7 that constitutes the disk media 1A or alternatively realizable by removing through laser trimming the portion which becomes the slit 6A or slit 6B after having formed the metal film layer 4a on the resin substrate 7.

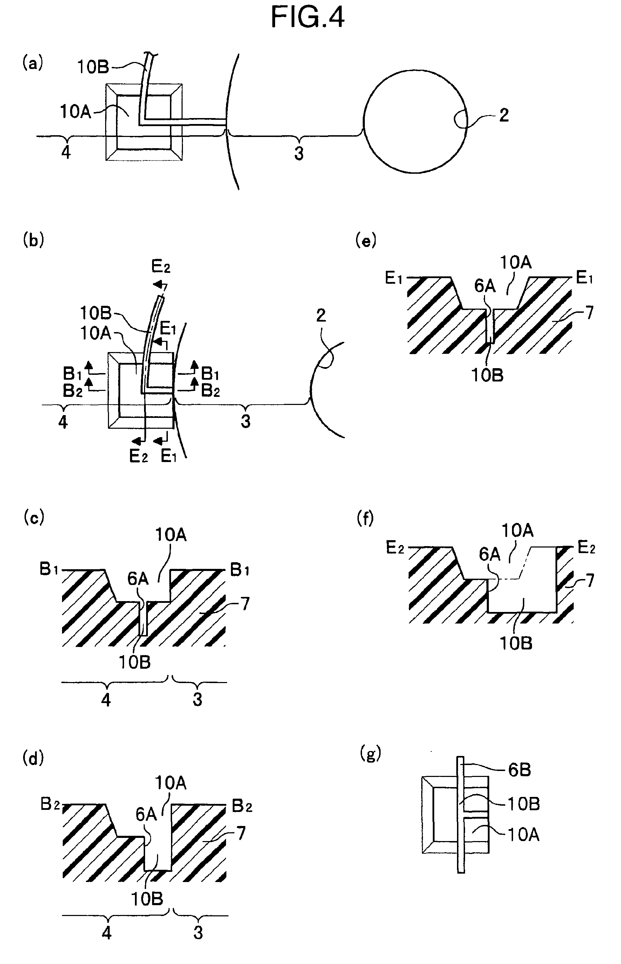

Furthermore, the formation of the slit 6A or slit 6B is achievable in a way which follows. During molding of the resin substrate 7 that constitutes the disk media 1A, an L-shaped or T-like groove pattern is formed in the resin substrate 7 (corresponding to the groove 10B of Fig. 4(b)). Then, the metal film layer 4a is formed by sputtering on the surface of resin substrate 7. Whereby, no film is formed on a vertical wall of the opposing sidefaces in the L- or T-shaped groove pattern so that the metal film layer 4a is electrically separated at the portion of the vertical wall of L- or T-shaped groove 10B. This results in formation of the slit 6A or slit 6B (see (a) to (g) of Fig. 4). Additionally, by designing the walls of opposing sidefaces in the L- or T-shaped groove 10B formed in the resin substrate 7 to have an inverse tapered shape with a widened bottom face, film formation on the walls of the opposing sidefaces is almost completely preventable, so it is possible to form the slit 6A or slit 6B more successfully.

Further, when film fabrication is performed by anisotropic deposition (sputtering) with enhanced linear progressivity, the intended film is formed at flat portions while at the same time guaranteeing that no films are formed on the walls of the opposing sidefaces of the groove 10B that forms the slit 6A or slit 6B so that the metal film layer 4a is formed successfully and, simultaneously, it is possible to form the slit 6A or slit 6B without fail.

### « Modification of First Embodiment »

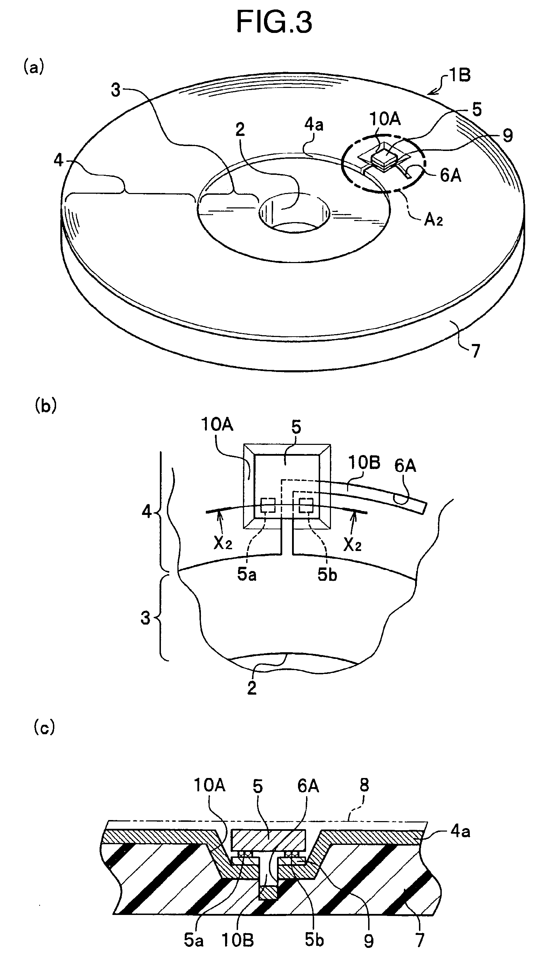

An explanation will next be given of a modified example of the first embodiment while referring to Figs. 3 to 5 below. Fig. 3 pictorially shows the structure of a disk media which is a modification of the embodiment, wherein (a) is a top plan view, (b) is an enlarged top view of a part A₂ of (a), and (c) is an enlarged sectional view as taken along line X₂-X₂ of (b).

While the first embodiment is arranged so that the IC chip 5 is mounted at the surface of metal film layer 4a on the flat resin substrate 7, this modification is such that a recess 10A is formed in a surface portion of resin substrate 7 of a disk media 1B, followed by forming of a metal film layer 4a and then mounting of IC chip 5 on a top surface of the metal film layer 4a at the bottom of recess 10A. The same parts or components of it are designated by the same reference characters used in the first embodiment, and explanations thereof are eliminated herein.

The recess 10A has its depth which is equal to a total of the thickness of IC chip 5 and the thickness of an isotropic conductive film 9 as will be described later; for example, the recess depth is about 100µm. The recess 10A is square or rectangular in its planar shape, which is almost similar to the planar shape of IC chip 5. Sidewalls of four sides of the recess 10A are slanted faces extending toward its bottom face, with a metal film layer 4a being formed thereon.

As shown in (b) and (c) of Fig. 3, a groove 10B is formed in the bottom face of the recess 10A. This groove 10B has a depth of, for example, about 100µm from the bottom face of recess 10A. Grove 10B has sidewalls which are almost vertical or, alternatively, are inversely tapered resulting in the bottom face becoming widened to thereby enable prevention of unwanted fabrication of the metal film layer 4a.

As shown in Fig. 3(c), the IC chip 5 has signal input/output electrodes 5a-5b which are electrically connected to the metal film layer 4a while bridging the groove 10B.

Fig. 4(a) is a plan view of part of the disk media with the recess 10A being laid out in a portion surrounded by the metal film layer formation region 4. As shown herein, inclined or "sloped" faces are formed from the periphery of four sides to the bottom face of recess 10A, with an L-like groove 10B being formed in resin substrate 7 to cause a corner of "L" shape to reside at a central portion of recess 10A while letting one end of L-like groove 10B be opened to the metal film layer non-formation region 3 in a similar way to the first embodiment. Fig. 4(b) is a plan view of a modification having its recess 10A which is disposed at the boundary between the metal film layer formation - region 4 and metal film layer non-formation region 3, wherein a sidewall of one side of recess 10A on the metal film layer non-formation region 3 side is not always designed to have the inclined plane. For instance, although the L-like groove 10B is formed in the resin substrate 7 so that the corner of "L" shape is placed at the center portion of the bottom face of recess 10A, one end of groove 10B is closed at a portion of the vertical sidewall of recess 10A. Cross-sectional views of the recess 10A and groove 10B of resin substrate 7 in the case of (b) are shown in a B₁-B₁ sectional diagram of (c), B₂-B₂ sectional diagram of (d), E₁-E₁ sectional diagram of (e), and E₂-E₂ sectional diagram of (f).

Note that the slit 6A should not exclusively be limited to the shape of L-like groove 10B such as shown in (a) and (b) of Fig. 4 and may alternatively be replaced by the slit 6B with L-like groove 10B as shown in Fig. 4(g). Additionally the shape and length of slit 6A, 6B are determined to ensure that the impedance of IC chip 5 to be mounted matches the impedance of the antenna of metal film layer 4a.

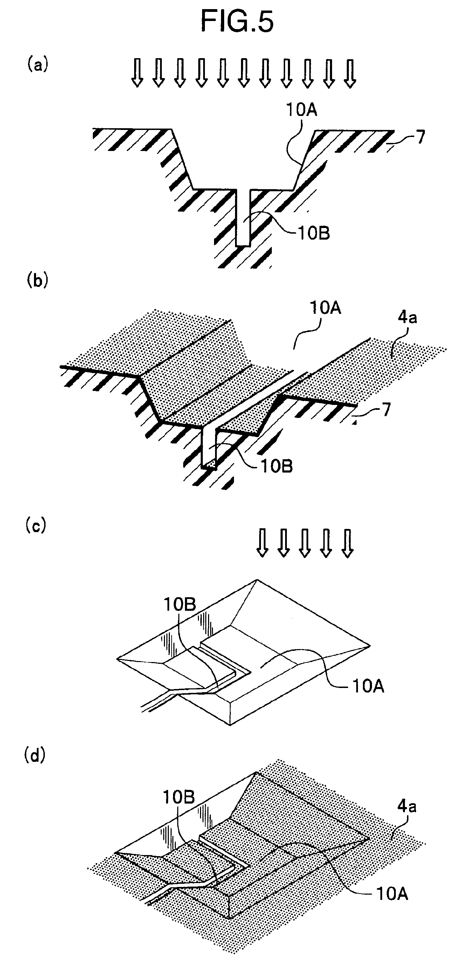

A process of forming the slit 6A or slit 6B by anisotropic deposition when forming the metal film layer 4a in the metal film layer formation region 4 will next be described with reference to Fig. 5, while taking as an example the case of slit 6A. Fig. 5 is a diagram showing the process of forming the slit 6A by anisotropic deposition, wherein (a) is a partial sectional view of a resin substrate 7 having a groove 10B which is formed in recess 10A with its four sides having inclined faces, (b) is a perspective view of the recess 10A of (a) with a film being formed by anisotropic deposition, (c) is a perspective view of recess 10A with a vertical wall being provided at one surface of four sides thereof and also with a groove 10B defined at the bottom face of recess 10A, and (d) is a perspective view of a film formed in the recess 10A of (c) by anisotropic deposition.

When the metal film layer 4a is formed by anisotropic deposition from above the resin substrate 7 along almost the vertical direction as indicated by arrows in Fig. 5(a), the metal film layer 4a is formed on the slanted faces of four sides of recess 10A and its bottom face to a thickness of about 50 to 250nm (i.e., 0.05 to 0.25µm) as shown in Fig. 5(b).

However, the metal film layer 4a is not formed on the opposing vertical sidewall of the groove 10B because the anisotropic deposition offers enhanced linear progressivity during film fabrication. Accordingly, the metal film layer 4a thus formed is separated at the opposing vertical sidewall part of the groove 10B, thereby enabling formation of an electrically isolated slit 6A. In other words, it is possible to form the slit 6A or slit 6B in metal film layer 4a in a similar way to the first embodiment with the metal film layer 4a being selectively removed (by etching) into the L- or T-like shape.

On the other hand, as shown in Fig. 5(c), in case the sidewall of one side of the recess 10A formed in resin substrate 7 (left-side sidewall as depicted herein) becomes the vertical wall, a structure is realizable which causes a shorter part of the L-like groove 10B provided at the bottom of recess 10A to terminate or "close" at such vertical wall. In such arrangements of the recess 10A and groove 10B, when performing anisotropic deposition from above the resin substrate 7 in almost the vertical direction as indicated by arrows in Fig. 5(c), the metal film layer 4a is formed on the top surface of resin substrate 7 and the slanted faces of four sides and bottom face of the recess 10A to a thickness of about 50 to 250nm (0.05 to 0.25µm) as shown in Fig. 5(d).

However, the metal film layer 4a is never formed on the opposing vertical sidewall of the groove 10B because the anisotropic deposition offers inherently enhanced linear progressivity during film fabrication. The metal film layer 4a is neither formed on the vertical wall (left-side sidewall illustrated) of recess 10A. Accordingly, the metal film layer 4a formed is separated at the vertical sidewall part of the recess 10A, thereby enabling the groove 10B to form the electrically isolated slit 6A. In other words, it is possible to form the slit 6A in metal film layer 4a in a similar way to the first embodiment.

Next, an isotropic conductive film 9 is deposited on the surface of metal film layer 4a that was formed on the bottom face of recess 10A, followed by pushing and pressing the IC chip 5 mounted on the bottom face of this recess 10A, whereby the signal input/output electrodes 5a-5b of IC chip 5 are electrically connected to the metal film layer 4a formed on the bottom face of recess 10A while bridging the groove 10B. Then, the protective layer 8 is formed to coat the entire surface of metal film layer formation region 4 (see Fig. 3(c)).

By embedding the IC chip 5 in the resin substrate 7 along the depth thereof as shown in Fig. 3, it is possible to make flat or "planarize" the surface of metal film layer formation region 4 in the disk media 1B more successfully when compared to the case of the first embodiment, thereby enabling achievement of a larger mechanical clearance relative to a disk drive device at the top surface of protective layer 8 of the disk media 1B.

### «Second Embodiment»

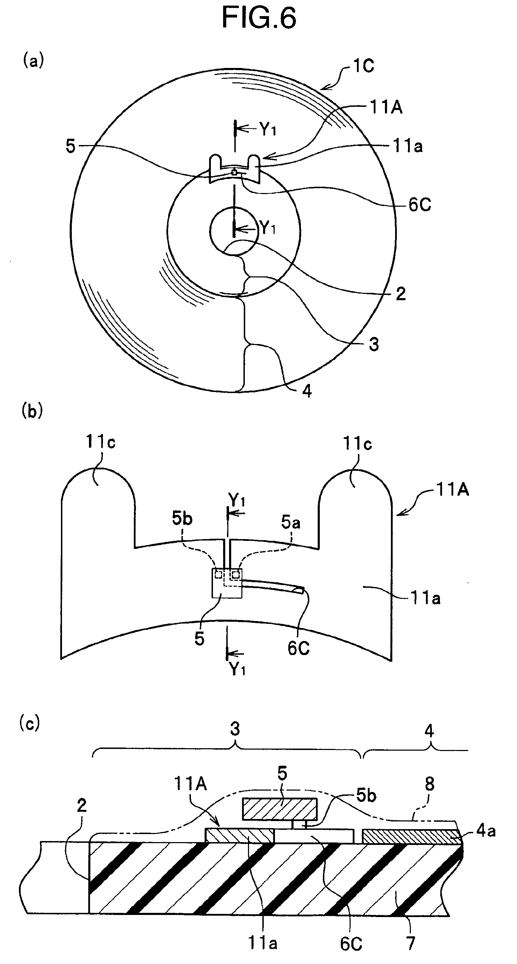

A disk media 10C of second embodiment will next be described with reference to Fig. 6. Fig. 6 is a diagram schematically showing a structure of the disk media of this embodiment, wherein (a) is its top plan view, (b) is a plan view of a small-size inlet, and (c) is an enlarged sectional view as taken along line Y₁-Y₁ of (a).

While the first embodiment and its modification stated supra are related to the disk media 1A or disk media 1B with the IC chip 5 being directly mounted on the surface of metal film layer 4a, the disk media 10C of this embodiment is the one that has a built-in size-reduced inlet 11A which includes an IC chip 5 and a small-size antenna 11a at a selected position in the metal film layer non-formation region 3. The same parts or components of it as those of the first embodiment and its modification are indicated by the same reference characters, and explanations thereof are eliminated herein for brevity purposes.

As shown in Fig. 6(a), the small-size inlet 11A is the one that has its own small-size antenna 11a made of a metallic thin-film of a chosen electrical conductor such as aluminum (Al), which is formed by adhesion, vapor deposition or printing of a metal foil onto the surface of an insulator base film (not depicted), with an L-like slit 6C being formed at a central portion of the small-size antenna 11a and with signal input/output electrodes 5a-5b of IC chip 5 being mounted so that these are electrically connected to the small-size antenna 11a by eutectic crystal junction or by use of an anisotropic conductive film while bridging the slit 6C. The small-size inlet 11A is 5 to 15mm in length: this length is approximately 0.04λ to 0.14λ, where λ is the wavelength of an electromagnetic wave used for signal transmission and reception, which is 2.45GHz, as an example. The small-size antenna 11a of small-size inlet 11A has a curvature adapted to the curvature of a mount position of the small-size inlet 11A in an elongate direction, i.e., a boundary peripheral portion of the metal film layer non-formation region 3 relative to metal film layer formation region 4, and is shaped to have at its both ends a couple of peaks or "ears" extending outward in radial directions of the disk media 1C. The slit 6C has a shorter portion of "L"-like shape which extends from an L-like corner portion to an outward radial direction of disk media 1C and a longer portion of L-like shape extending from the L-like corner in a circumferential direction of the disk. The ear-added small-size inlet 11A thus arranged in this way is mounted on a surface of the metal film layer non-formation region 3 of disk media 1C and pasted by an adhesive agent to the back surface of the base film as shown in Fig. 6(a). End portions 11c of the ears of the small-size antenna 11a are connected by electrostatic capacitive coupling to the metal film layer 4a via the base film (not shown).

Note here that when pasting the small-size inlet 11A, careful positioning must be done to prevent a main body part (a portion excluding the ear ends 11c) of the small-size antenna 11a including the slit 6C of small-size antenna 11a from coming into contact with or overlapping the metal film layer 4a of metal film layer formation region 4. Also note that in this embodiment, the ear ends 11c of small-size antenna 11a for use as the "predetermined portion of small-size antenna" as claimed are connected to the metal film layer 4a by electrostatic capacitive coupling.

### «Modification of Second Embodiment»

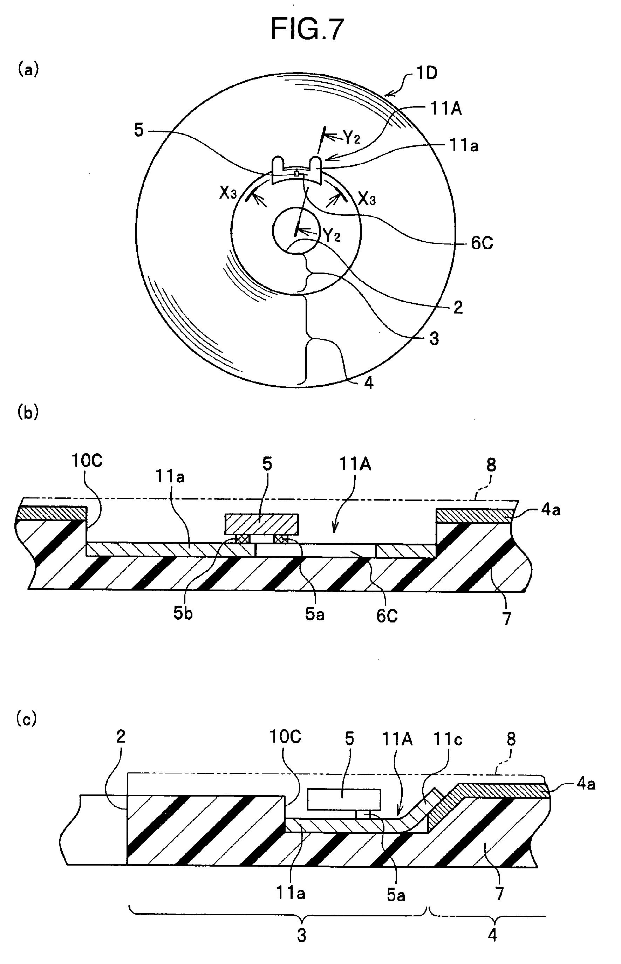

A modified example of the second embodiment will next be explained with reference to Fig. 7. This modification is such that in the second embodiment, the recess 10C is provided in the metal film layer non-formation region 3 with the ear-added small-size inlet 11A being mounted at there. Fig. 7 is a diagram schematically showing a structure of a disk media 1D of this modification, wherein (a) is its top plan view, (b) is an enlarged sectional view as taken along line X₃-X₃ of (a), and (c) is an enlarged sectional view along line Y₂-Y₂ of (a).

The ear-added small-size inlet 11A is similar in structure to that shown in Fig. 6(b). As shown in Fig. 7(a), the recess 10C is defined in resin substrate 7 in such a way as to be substantially identical with the planar shape of the ear-added small-size inlet 11A. A portion of the recess 10C which coincides with the shape of a main body part of small-size inlet 11A is formed in the metal film layer non-formation region 3. Portions suited to the shapes of ear ends 11c of small-size inlet 11A are so formed as to thrust toward the metal film layer formation region 4 and thus become an upslope-like slanted plane in an outward radial direction of the disk media 1C as better shown in Fig. 6(c). After having formed a metal film layer 4a, the small-size inlet 11A is adhered to the recess 10C. In doing so, let the ear ends 11c on the both sides of small-size antenna 11a be connected to the metal film layer 4a by electrostatic capacitive coupling.

Additionally, when adhering the small-size inlet 11A, position alignment is done carefully in such a way as to prevent the main body part of the small-size antenna 11a including the slit 6C from coming into contact with and/or overlapping the metal film layer 4a of metal film layer formation region 4.

### «Effects of Second Embodiment and Its Modification»

According to this embodiment and its modification, the metal film layer 4a functions as the antenna so that the ear-added small-size inlet 11A is arrangeable by the small-size antenna 11a having the slit 6C with its length of 5 to 15mm (equal to 0.04λ to 0.14λ, in the case of a radio wave with its wavelength λ of 2.45GHz, for example). Thus the small-size inlet 11A is significantly reducible in size, thus enabling the disk media 1C, 1D, such as CD or else, to mount thereon more than two small-size inlets 11A. This makes it possible to permit the IC chip 5 to perform data read/write operations in response to multiple communications of different frequency bands.

According to this embodiment and its modification, the ear ends 11c on the both sides of the small-size antenna 11a of ear-added small-size inlet 11A are connected to the metal film layer 4a by electrostatic capacitive coupling, thereby enabling the metal film layer 4a to be used as the antenna.

Their effects are similar to those obtained by the first embodiment and its modification. More specifically, the small-size inlet 11A for use as RFID tag being mounted on the disk media 1C, 1D is able to use the metal film layer 4a as the antenna of IC chip 5, thereby enabling formation of a sensitivity-enhanced antenna together by co-use with the small-size antenna 11a. In addition, since the metal film layer 4a is used as the antenna without having to add any new members, there are no causes as to a cost increase for prior art IC chip-mounted disk media.

Additionally, as the metal film layer 4a covering a wide range becomes the antenna, it is possible to provide an extensive read/write area for reader/writer equipment.

In particular, according to the modification of this embodiment, it is possible to improve the flatness of the top surface side after adhesion of the small-size inlet 11A more significantly than the second embodiment.

### «Third Embodiment»

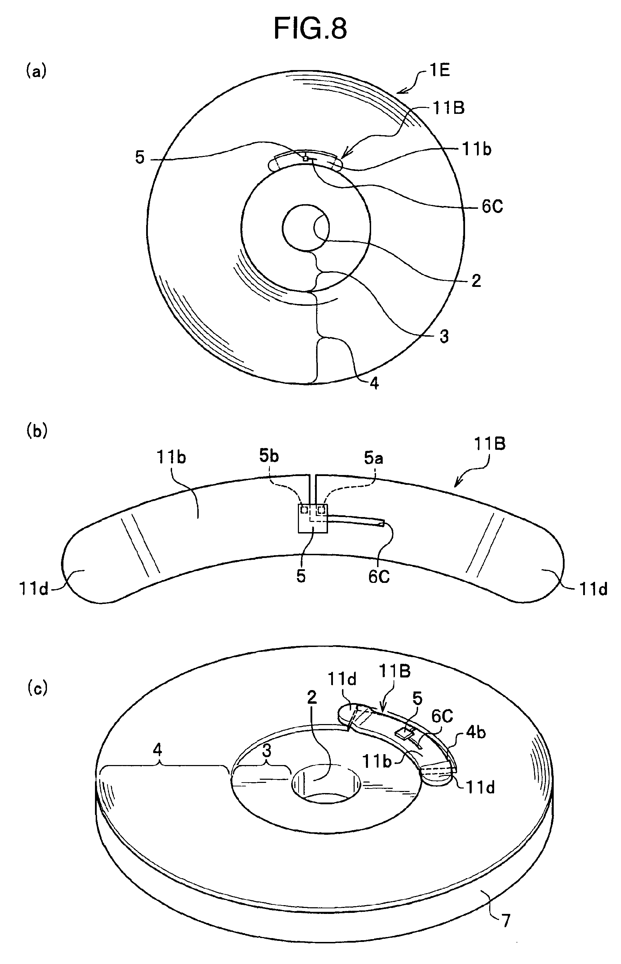

An explanation will next be given of a disk media 1E of a third embodiment while referring to Fig. 8. Fig. 8 is a diagram schematically showing a structure of the disk media of this embodiment, wherein (a) is its top plan view, (b) is a plan view of a small-size inlet, and (c) is an enlarged perspective view of a portion at which a small-size inlet is mounted.

Although the second embodiment and its modification are arranged so that the ear-added small-size inlet 11A is disposed to reside substantially in the metal film layer non-formation region 3 while letting the ear ends 11c of its small-size antenna 11a be connected by electrostatic capacitive coupling to the metal film layer 4a of metal film layer formation region 4, this embodiment is designed to use an earless small-size inlet 11B for electrostatic capacitive coupling to the metal film layer 4a. The same parts or components as those of the second embodiment or its modification are designated by the same reference characters, with explanations thereof being eliminated herein.

As shown in Fig. 8(b), the small-size inlet 11B is the one that has a small-size antenna 11b made of a metallic thin-film of an electrical conductor such as Al, which is formed by bonding, vapor deposition or printing of a metal foil on the surface of an insulative base film (not shown), with an L-like slit 6C being defined at a central portion of the small-size antenna 11b and with signal input/output electrodes 5a-5b of IC chip 5 being mounted so that these are electrically connected to the small-size antenna 11b by ultrasonic bonding or eutectic crystal junction or by use of an anisotropic conductive film while spanning or "bridging" the slit 6C. The small-size inlet 11B is 5 to 15mm long: this length is about 0.04λ to 0.14λ, where λ is the wavelength of a radiowave used for signal transmission and reception, which is 2.45GHz, as an example. The small-size antenna 11b of small-size inlet 11B has a curvature adapted to the curvature of a mount position of the small-size inlet 11B in the elongate direction, i.e., a boundary peripheral portion of the metal film layer formation region 4 with respect to the metal film layer non-formation region 3, and is shaped to have its both ends which are designed so that terminate ends 11d extending in the circumferential direction project toward the metal film layer 4a. The slit 6C has a shorter portion of "L"-like shape which extends from an L-like corner portion to an outward radial direction of disk media 1E and a longer portion of L-like shape extending from the L-like corner in the circumferential direction of the disk. The small-size inlet 11B thus arranged is adhered to a surface of resin substrate 7 having a non-film formation part (metal film layer non-formation part) 4b of a boundary peripheral portion of the metal film layer formation region 4 of disk media 1E relative to metal film layer non-formation region 3, in which the metal film layer 4a is not formed, thereby causing the both end portions 11d of small-size antenna 11b in the elongate direction to be connected to the metal film layer 4a by electrostatic capacitive coupling via the base film (not shown).

Additionally, when adhering the small-size inlet 11B, the non-film formation part 4b is formed and disposed in such a way as to prevent the main body part of small-size antenna 11b including the slit 6C from coming into contact with and/or overlapping the metal film layer 4a of metal film layer formation region 4.

The non-film formation part 4b is readily fabricatable by masking of such portion when forming the metal film layer 4a.

### «First Modification of Third Embodiment»

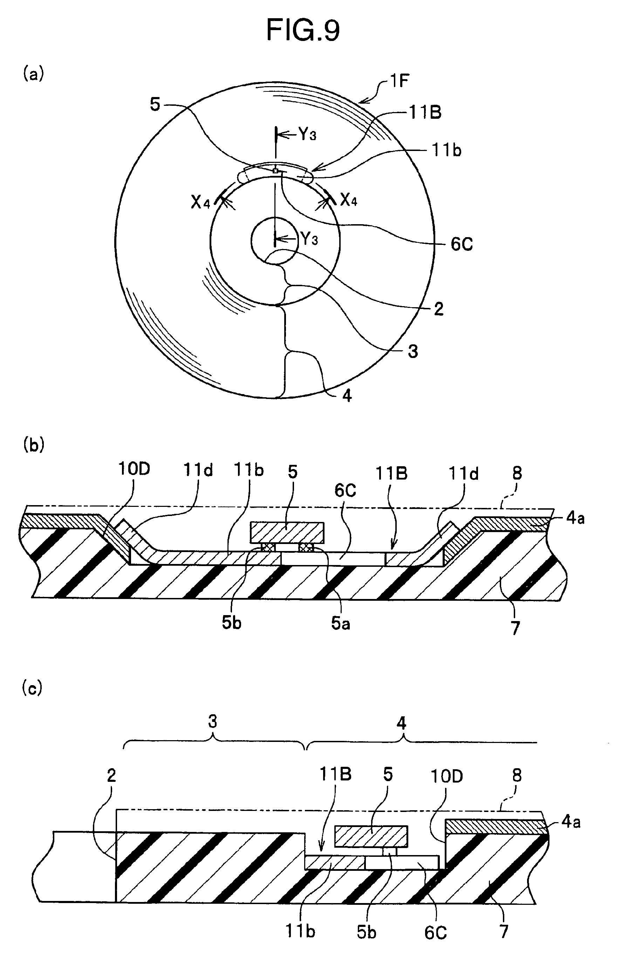

An explanation will next be given of a first modification of this embodiment with reference to Fig. 9. This example is a modified version of the third embodiment, wherein a recess 10D is provided in the metal film layer formation region 4 with the small-size inlet 11B being mounted at there. Fig. 9 is a diagram schematically showing a structure of a disk media of this modification, wherein (a) is a top plan view, (b) is an enlarged sectional view as taken along line X₄-X₄ of (a), and (c) is an enlarged sectional view along line Y₃-Y₃ of (a).

The ear-less small-size inlet 11B is the same in structure as that shown in Fig. 8(b). As shown in Fig. 9(a), the recess 10D that is fitted to the planar shape of small-size inlet 11B is formed in a resin substrate 7 at the boundary peripheral portion of a metal film layer formation region 4 relative to metal film layer non-formation region 3. At this time the recess 10D is formed so that portions of the recess 10D corresponding to the both ends 11d of small-size inlet 11B in the elongate direction create respective upslope-like slanted planes extending toward the both ends in the elongate direction. And, when fabricating the metal film layer 4a, masking is performed to ensure that any film is not formed at the bottom face of recess 10D excluding the upslope portions. After the film fabrication, the small-size inlet 11B is adhered to recess 10D. In doing so, the both ends 11d of small-size antenna 11b in the elongate direction are connected to the metal film layer 4a by electrostatic capacitive coupling via a base film (not shown).

Additionally, when adhering the small-size inlet 11B, careful positioning is done to prevent the main body of small-size antenna 11b including the slit 6C from coming into contact with and/or overlapping the metal film layer 4a of metal film layer formation region 4.

### «Second Modification of Third Embodiment»

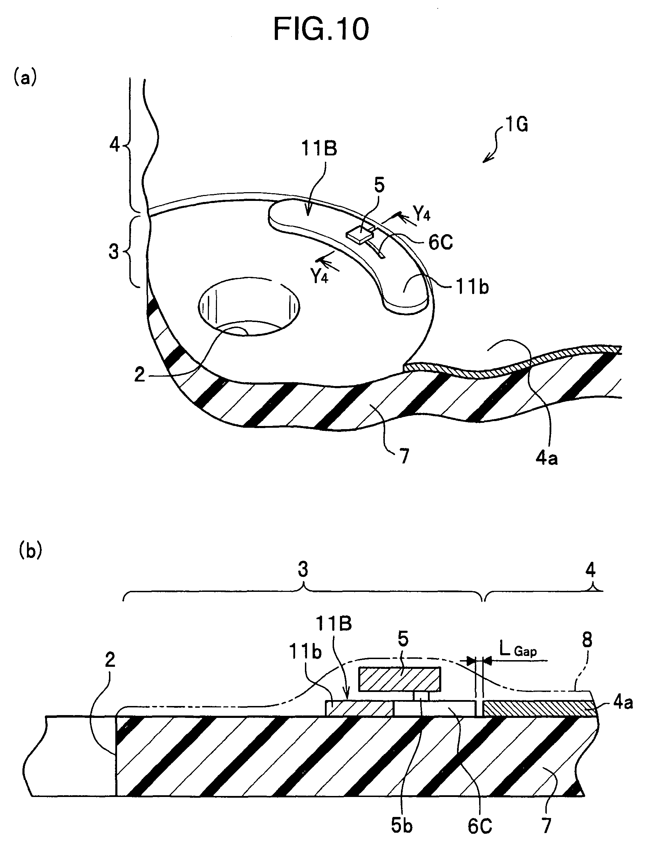

An explanation will next be given of a second modification of the third embodiment with reference to Fig. 10. This is another modified version of the third embodiment, with the small-size inlet 11B being mounted in the metal film layer non-formation region 3. Fig. 10(a) is a top plan view of this modification, and Fig. 10(b) is an enlarged sectional view taken along line Y₄-Y₄ in Fig. 10(a).

The earless small-size inlet 11B is the same in structure as that shown in Fig. 8(b). As shown in Fig. 10(b), the small-size inlet 11B is adhered to the surface of resin substrate 7 at a boundary peripheral portion of the metal film layer non-formation region 3 with the metal film layer formation region 4 so that a gap L_{Gap} of 1mm or less is defined between the small-size antenna 11b and the metal film layer 4a of metal film layer formation region 4. By disposing the small-size antenna 11b and the metal film layer 4a of metal film layer formation region 4 while providing the gap L_{Gap} therebetween in this way, the small-size antenna 11b and metal film layer 4a are connected together by electrostatic capacitive coupling.

Additionally, when adhering the small-size inlet 11B, careful positioning must be done to prevent the main body of small-size antenna 11b including the slit 6C from coming into contact with and/or overlapping the metal film layer 4a of metal film layer formation region 4.

### «Third Modification of Third Embodiment»

An explanation will next be given of a further modification of the second modification of the third embodiment with reference to Fig. 10. In this modification, a recess having its planar shape almost fitted to that of the ear-less small-size inlet 11B is formed at the boundary peripheral portion of the metal film layer non-formation region 3 with respect to the metal film layer formation region 4 in a similar way to the modification of the second embodiment. After having formed the metal film layer 4a, the small-size inlet 11B is pasted to the recess. In such event, the small-size antenna 11b and metal film layer 4a are disposed to ensure that a gap therebetween is 1mm or less, thereby causing the small-size antenna 11b to be connected to the metal film layer 4a by electrostatic capacitive coupling.

Additionally, when pasting the small-size inlet 11A, position alignment is done to prevent the main body of small-size antenna 11a including the slit 6C from coming into contact with and/or overlapping the metal film layer 4a of metal film layer formation region 4.

### « Effects of Third Embodiment and its Modifications »

According to this embodiment and its modifications, the small-size antenna 11b of the ear-less small-size inlet 11B is connected to the metal film layer 4a by electrostatic capacitive coupling either at the both ends 11d or at an edge on the metal film layer formation region 4 side of small-size antenna 11b, thereby making it possible to use the metal film layer 4a as the antenna.

Their effects are similar to those obtained by the second embodiment and its modification. More specifically, the small-size inlet 11B for use as RFID tag being mounted on the disk media 1E, 1C, 1G is able to use the metal film layer 4a as the antenna of IC chip 5, thereby enabling formation of a sensitivity-enhanced antenna together by co-use with the small-size antenna 11b. Also importantly, since the metal film layer 4a is used as the antenna without having to add any new components, there are no causes as to a cost increase for prior art IC chip-mounted disk media.

Additionally, as the metal film layer 4a covering a wide range becomes the antenna, it is possible to provide an extensive read/write area for reader/writer equipment.

In particular, according to the first and third modifications of this embodiment, it is possible to improve the flatness of the top surface side after adhesion of the small-size inlet 11B more significantly than the third embodiment.

### «Other Modifications in Second and Third Embodiments»

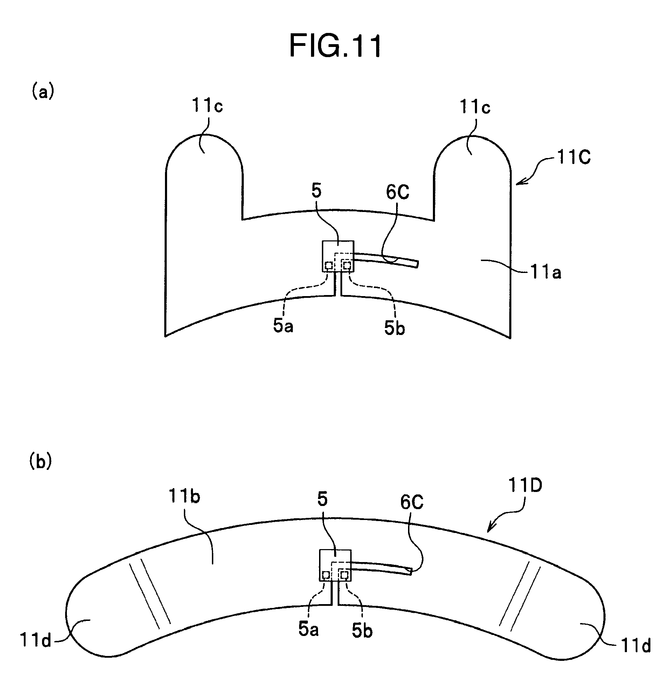

Although in the second and third embodiments and modifications thereof the shorter portion of "L"-like shape in the almost L-shaped slit 6C of small-size inlet 11A, 11B is arranged to extend from the corner of the L-like shape toward the outer radial direction of the disk media, this is not to be construed as limiting the invention. As in a small-size inlet 11C and small-size inlet 11D shown in (a) and (b) of Fig. 11, the shorter portion of "L"-like shape in the almost L-like slit 6C may be designed to extend from the corner of the L-like shape to an inner radial direction of the disk media.

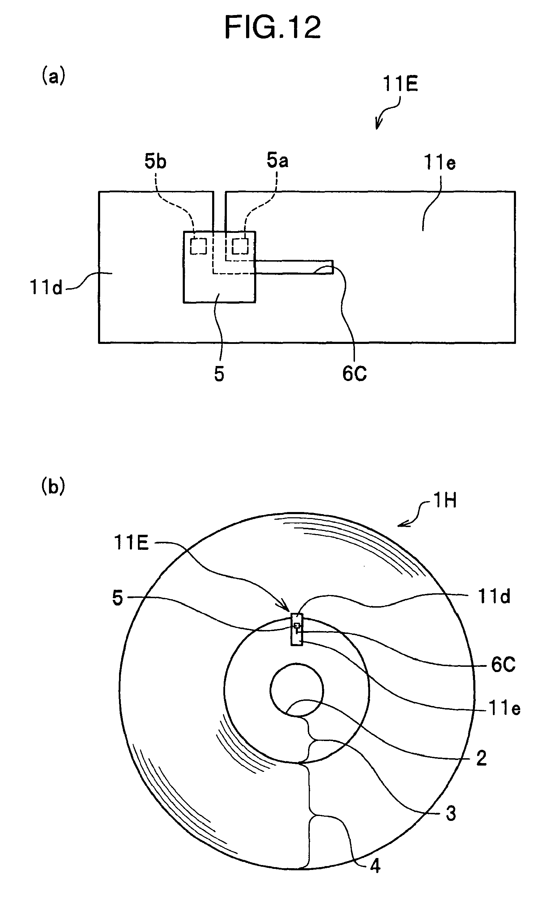

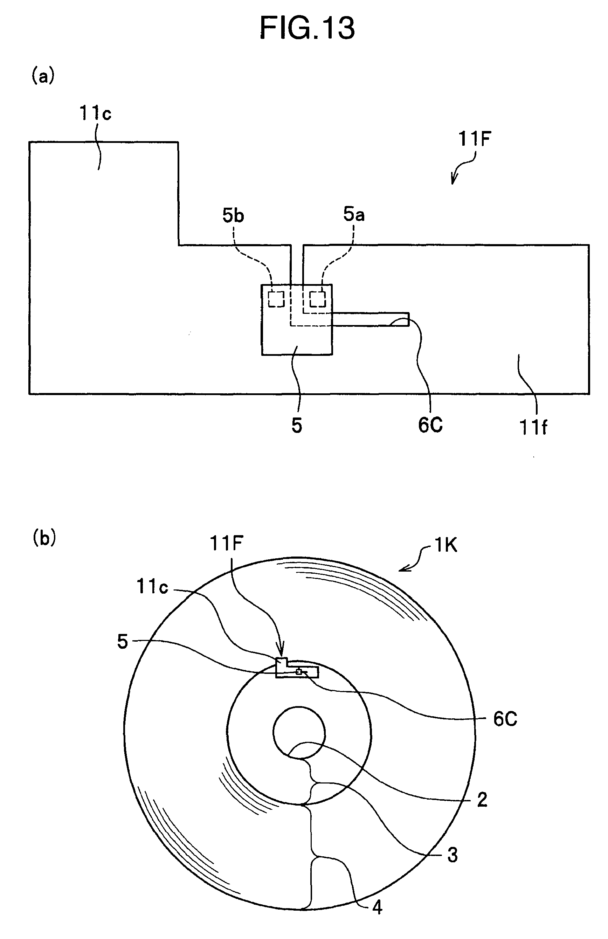

In addition, the small-size inlet 11A, 11B in the second and third embodiments and their modifications may be replaced by any one of a linear small-size inlet 11E such as shown in Fig. 12(a) and an L-shaped small-size inlet 11F shown in Fig. 13(a). Exemplary methods of mounting the linear small-size inlet 11E and L-shaped small-size inlet 11F are shown in Fig. 12(b) and Fig. 13(b), respectively.

The small-size inlet 11E, 11F is the one that has a linear small-size antenna 11e or L-like small-size antenna 11f made of a metallic thin-film of an electrical conductor such as Al, which is formed by adhesion, vapor deposition or printing of a metal foil on the surface of an insulator base film (not shown), with an L-like slit 6C being defined at a central portion of the small-size antenna 11e, 11f and also with signal input/output electrodes 5a-5b of IC chip 5 being mounted so that these are electrically connected to the small-size antenna 11e or small-size antenna 11f by eutectic crystal junction or by using an anisotropic conductive film while bridging the slit 6C. The small-size inlet 11E, 11F is 5 to 15mm in length. This length is set to about 0.04λ to 0.14λ, where λ is the wavelength of a radiowave used for signal transmission and reception, which is 2.45GHz as an example.

In a disk media 1H shown in Fig. 12(b), the ear-added small-size inlet 11A in the second embodiment is arranged so that only one of the both ends 11d is connected to the metal film layer 4a by electrostatic capacitive coupling, rather than the arrangement that causes the both ends 11d to be connected to the metal film layer 4a by electrostatic capacitive coupling. In a disk media 1K shown in Fig. 13(b), the ear-added small-size inlet 11A in the second embodiment is designed so that only the shorter portion of "L"-like shape is connected to the metal film layer 4a by electrostatic capacitive coupling, rather than the design that causes both ends 11c of small-size antenna 11a to be connected to the metal film layer 4a by electrostatic capacitive coupling.

Additionally in the examples shown in Fig. 12(b) and Fig. 13(b), a modification thereof is available which is arranged so that the small-size inlet 11E or small-size inlet 11F is adhered to a recess formed in the metal film layer non-formation region 3 of resin substrate 7 as in the modification of the second embodiment while letting one end 11d or end 11c be connected to the metal film layer 4a by electrostatic capacitive coupling.

Further, the small-size inlet 11E or small-size inlet 11F may be adhered to a non-film formation part 4b which is formed in the boundary peripheral portion of the metal film layer formation region 4 with respect to the metal film layer non-formation region 3 as in the third embodiment while causing one end 11d or end 11c to be connected to the metal film layer 4a by electrostatic capacitive coupling.

Furthermore, the small-size inlet 11E or small-size inlet 11F may be pasted to a recess for use as the non-film formation part 4b which is defined in resin substrate 7 at a boundary peripheral portion of the metal film layer formation region 4 relative to the metal film layer non-formation region 3 as in the first modification of the third embodiment while letting one end 11d or end 11c be connected to the metal film layer 4a by electrostatic capacitive coupling.

In this way, even when causing only one end 11d or 11c of the small-size antenna 11e or small-size antenna 11f to be connected to the metal film layer 4a by electrostatic capacitive coupling, it is possible to permit the metal film layer formation region 4 to function as the antenna.

Also note that in the second and third embodiments, the small-size inlet 11A, 11B may be adhered after having formed the protective layer 8, although its explanation diagrams are omitted. As a result, it is possible to reuse or "reincarnate" the presently existing finished disk media as an RFID-added disk media at low costs. In such case, the small-size inlet 11A, 11B may be formed by a process having the steps of disposing a protective film on the top surface side, depositing an adhesive material on the bottom face side of a base film with IC chip 5 and small-size antenna 11a, 11b mounted thereon, disposing a readily releasable paper, providing a sandwiched structure, peeling off the release paper, and bonding the small-size inlet 11A, 11B so that its terminate end 11c, 11d overlaps the metal film layer formation region 4. In this case also, when adhering the small-size inlet 11A, 11B, position alignment is carried out to prevent the main body of small-size antenna 11a, 11b including the slit 6C from coming into contact with and/or overlapping the metal film layer 4a of metal film layer formation region 4.

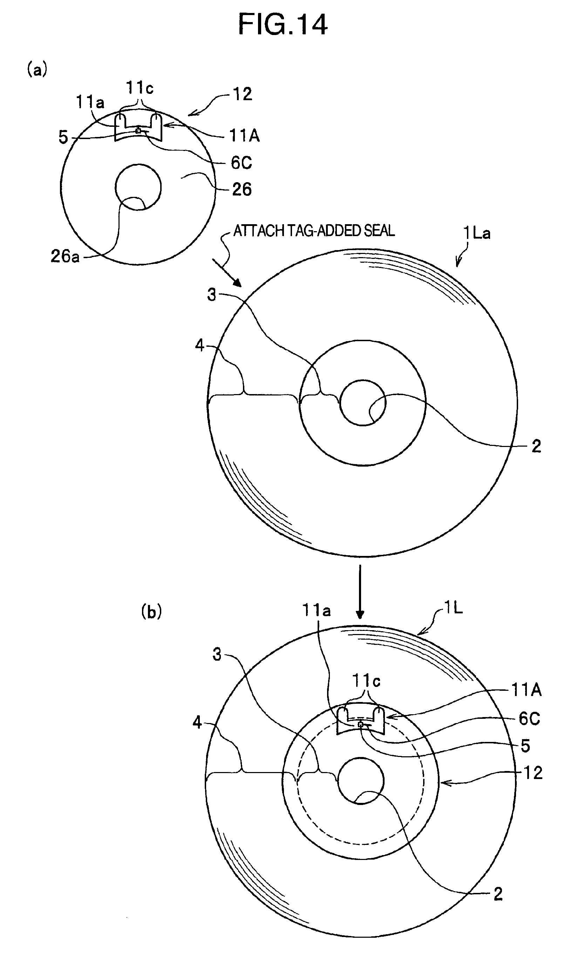

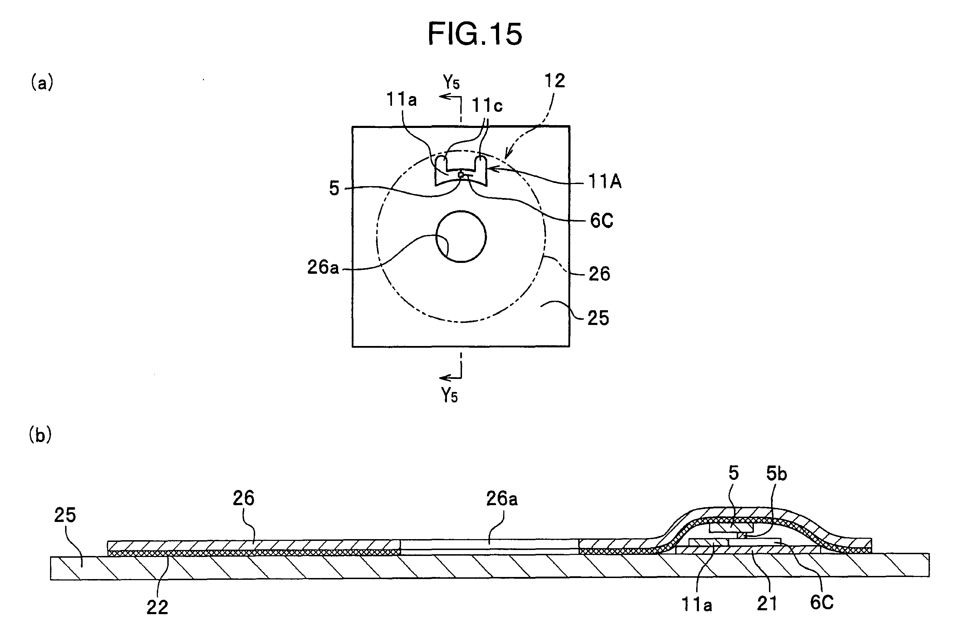

A method for attaching the small-size inlet after having formed the protective layer 8 will be described with reference to Figs. 14 and 15 while taking the small-size inlet 11A as an example. As shown in Fig. 14(a), a tag-added pasting seal 12 with the small-size inlet 11A mounted thereon is adhered to a target "raw" disk (i.e., disk media before the tag-added pasting seal 12 is bonded) 1La on which the protective layer 8 has already been formed, thereby creating a disk media 1L as shown in Fig. 14(b). Fig. 15(a) is a plan view of the tag-added pasting seal 12 whereas Fig. 15(b) is an enlarged sectional view of it as taken along line Y₅-Y₅ of Fig. 15(a).

As shown in Fig. 15, the tag-added pasting seal 12 is the one that includes an adhesive material 22 which is deposited on a one-side surface while causing a round disc-like protective film 26 having a center hole 26a centrally defined therein to be adhered onto a release paper 25 in such a manner as to include the small-size inlet 11A that is disposed on the release paper 25 at a prespecified position with the adhesive material 22 being placed downward.

The center hole 26a is the same in diameter as the center hole 2 of target disk 1La. The prespecified position on the release paper 25 refers to the layout that permits, when the center hole 26a is position-aligned with the center hole 2 of target disk 1La, the both ends 11c of small-size inlet 11A to overlap the metal film layer formation region 4 while at the same time preventing the slit 6C of small-size antenna 11a from overlapping the metal film layer formation region 4.

When pasting the protective film 26 to the release paper 25 so that it includes the small-size inlet 11A, it is recommendable to draw in advance corresponding contour line patterns or "sketches" on the release paper 25 at positions corresponding to the center hole 26a and small-size inlet 11A respectively and then put the small-size inlet 11A at the sketch of the small-size inlet 11A and thereafter adhere the protective film 26 in such a manner as to fit to the sketch of the center hole 26a to thereby manufacture the tag-added pasting seal 12.

Then, at the time of usage, the release paper 25 is peeled off; then, the tag-added pasting seal 12 is adhered to the target disk 1La after completion of position alignment between the center hole 26a of protective film 26 and the center hole 2 of target disk 1La. With this process, it is possible to readily paste the tag-added pasting seal 12 at the prespecified position with accuracy higher than when adhering it to the prespecified position while covering only the small-size inlet 11A with a protective film.

Although the explanation above was given as to a modification in the second embodiment by exemplifying the case of applying the small-size inlet 11A with reference to Figs. 14-15, the method of using the tag-added pasting seal 12 with this small-size inlet mounted thereon is not limited thereto. This method of using the tag-added pasting seal 12 with this small-size inlet mounted thereon is also applicable to the third embodiment using the small-size inlet 11B, the second modification of the third embodiment, and the second and third embodiments using modifications of the small-size inlet shown in Figs. 11-13, as modifications thereof.

Note here that an approach to applying the tag-added pasting seal 12 to the second and third embodiments and the modifications shown in Figs. 12-13 is more preferable than applying the tag-added pasting seal 12 using the small-size inlet 11B to the second modification of the third embodiment with the gap L between the small-size inlet 11B and metal film layer 4a being set to 1mm or less as shown in Fig. 10 since the former offers an increased setup position tolerance of the small-size inlet 11A, 11B on the tag-added pasting seal 12.

### «Effects of Other Modifications in Second and Third Embodiments»

The small-size inlet 11E, 11F that functions as RFID tag mounted on the disk media 1H, 1K is such that the metal film layer 4a is usable as the antenna of IC chip 5 whereby it is possible to form sensitivity-enhanced antenna by co-use with the small-size antenna 11e, 11f. In addition, since the metal film layer 4a is used as the antenna without having to add any new members, there are no causes as to cost increases for prior art IC chip-mounted disk media.

Additionally, as the metal film layer 4a covering a wide range becomes the antenna, it is possible to provide an extensive read/write area for reader/writer equipment.

In particular, according to the example which forms the recess of this modification in the resin substrate 7, it is possible to improve the flatness of the top surface side after attachment of the small-size inlet 11E, 11F.

Although in the second and third embodiments and their modifications the prespecified portion of the small-size antenna is designed so that the ear ends 11c or the both ends 11d in the elongate direction of the small-size inlet 11A, 11B, 11C, 11D, 11E, 11F are connected to the metal film layer 4a by electrostatic capacitive coupling, these may alternatively be electrically connected thereto in the absence of the base film. Even when connecting the small-size antenna 11a, 11b, 11e, 11f to metal film layer 4a by ordinary electrical conduction, it is possible for the metal film layer 4a to function as the antenna of the small-size inlet 11A, 11B, 11C, 11D, 11E, 11F.

Their effects are the same as those obtained by the second and third embodiments and the modifications thereof.

### «Fourth Embodiment»

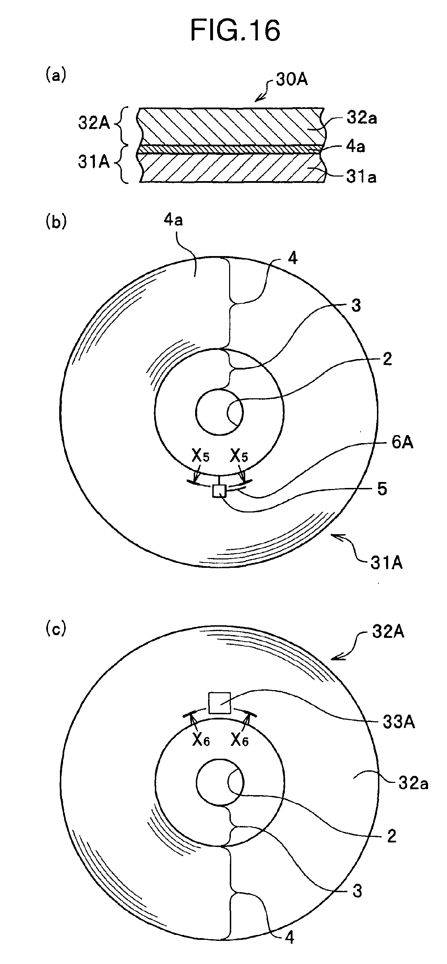

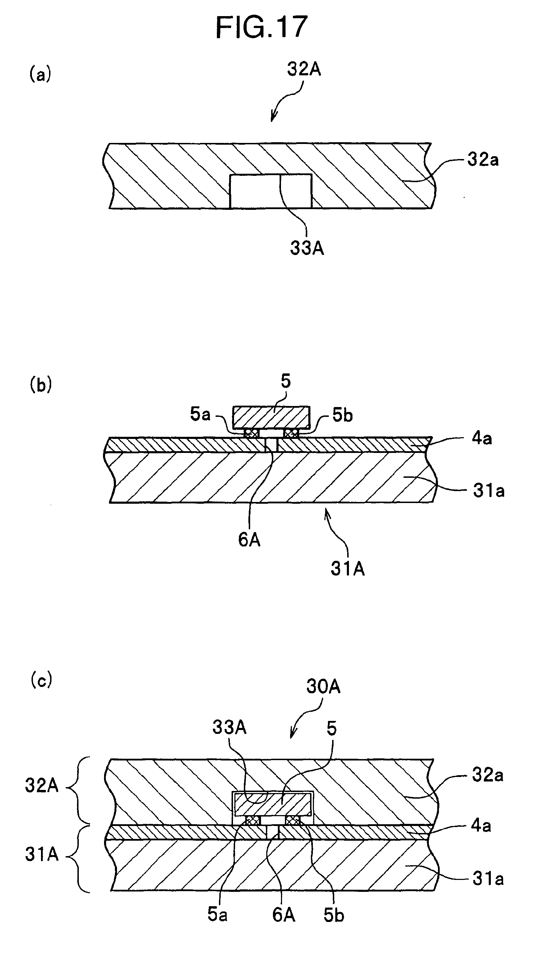

A disk media of fourth embodiment will next be described with reference to Figs. 16 and 17.

The disk media of this embodiment is a single-sided DVD 30A having a metal film layer formation region on its one-side surface only, which is the one that uses a metal film layer as an antenna. This single-sided DVD 30A is manufacturable by bonding thin CDs together while letting the individual resin substrate side be outside and letting respective metal film layer sides oppose each other; however, in this case, the resultant structure is a couple of disks bonded together, one of which has a metal film layer formed thereon, and the other of which remains as a resin substrate. Thus it is possible to use any one of the structures that have been explained in the first to third embodiments or the modifications thereof.

Fig. 16 is a diagram showing an arrangement of the single-sided DVD which is the disk media of the fourth embodiment with an IC chip mounted thereon.

As shown in part (a) of Fig. 16, the single-sided DVD 30A is structured from a first disk 31A having a metal film layer 4a on a first resin substrate 31a and a second disk 32A having a second resin substrate 32a that does not have a metal film layer 4a, which disks are bonded together. Both the first disk 31A and the second disk 32A are about 0.6mm in thickness, so a total thickness of single-sided DVD 30A is about 1.2mm-this value is the same as that of CDs. A difference is that a respective one of the disk media 1A-1K such as CDs has its metal film layer 4a formed under a thin protective layer 8 whereas the single-sided DVD 30A is arranged so that the metal film layer 4a is formed at almost the center in the direction along the thickness of disk.

Fig. 16(b) is a top plan view of the disk structure of Fig. 16(a), which is looked at from upper side of the first disk 31A prior to bonding with the second disk 32A; Fig. 16(c) is a bottom plan view of the second disk 32A prior to bonding with the first disk 31A. Fig. 17(a) is a sectional view of the second disk in Fig. 16(c) as taken along line X₆-X₆, Fig. 17(b) is an X₅-X₅ sectional view of the first disk in Fig. 16(b), and Fig. 17(c) is a sectional view after having bonded them together.

In the single-sided DVD 30A, as shown Fig. 16(b), an almost L-shaped slit 6A which is an impedance matching circuit is formed in the surface of the metal film layer 4a of first disk 31A in a similar way to the first embodiment, and an IC chip 5 is mounted so that signal input/output electrodes 5a-5b are connected to the metal film layer 4a while spanning or "bridging" the slit 6A at a corner portion of the L-like shape in a similar way to the first embodiment as shown in Fig. 17(b) (see Fig. 1(c) and Fig. 1(d)). On the other hand, a recess 33A capable of receiving therein the IC chip 5 is formed in the second resin substrate 32a of second disk 32A at a position corresponding to the IC chip 5 mounted on the metal film layer 4a of first disk 31A as shown in Fig. 16(c) and Fig. 17(a). When bonding together the first disk 31A and second disk 32A thus arranged, it is possible to realize the single-sided DVD 30A capable of using the IC chip-mounted metal film layer 4a as the antenna as shown in Fig. 17(c).

As a result, as shown in Fig. 17(c), the IC chip 5 is attached and equipped to the center part in the thickness direction of the single-sided DVD 30A.

Note that the same parts or components as those of the first embodiment are designated by the same reference characters, and explanation thereof are eliminated herein.

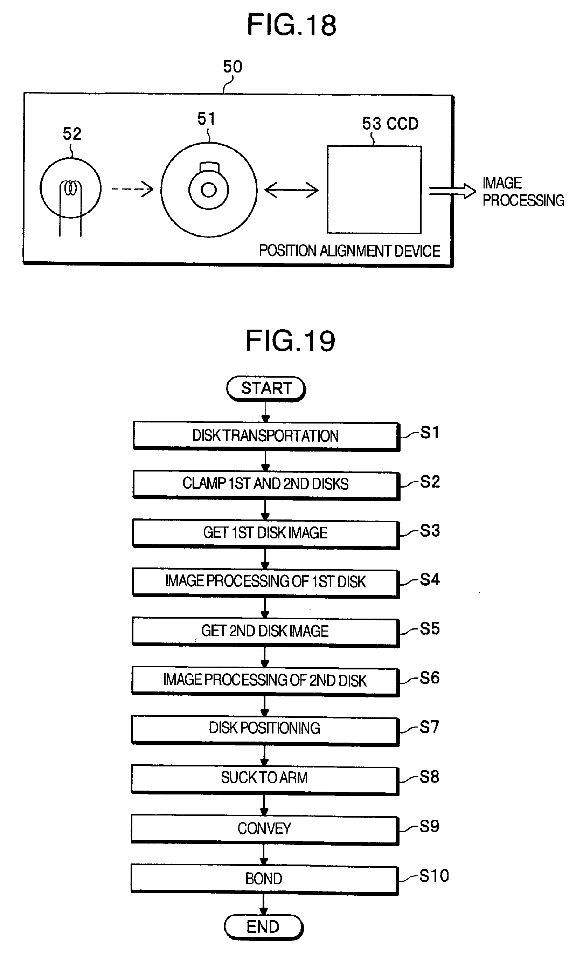

Fig. 18 is a schematic diagram showing a position alignment device 50 which performs position alignment of the couple of first disk 31A and second disk 32A making up the single-sided DVD 30A in this embodiment. The position alignment device 50 includes a rotary mechanism 51 for horizontally mounting thereon the first disk 31A and second disk 32A and for rotating them. The device also includes a light source 52 and an image sensor such as a charge-coupled device (CCD) 53 having image pickup functionality, which are disposed on the both sides, i.e., upside and downside of the rotary mechanism 51. The position alignment device 50 further includes an image processing device (not shown) connected to the CCD imager sensor 53 for detecting exact positions of the IC chip 5 being mounted on the first disk 31A and the recess 33A of second disk 32A, and a control device (not shown) responsive to receipt of a detection signal(s) from the image processor for performing position alignment between the position of the IC chip 5 of first disk 31A and the position of the recess 33A of second disk 32A.

It should be noted that although in Fig. 18 only one set of the rotary mechanism 51 and light source 52 plus CCD imager 53 is shown, the reality is that two sets of them are prepared, one of which is used for the first disk 31A and the other of which is for the second disk 32A.

Fig. 19 is a flow chart showing a process for bonding together the two disks, i.e., the first disk 31A and second disk 32A, which process is performed by the position alignment device 50. Firstly, the first disk 31A and second disk 32A are transported (at step S1). Then, first disk 31A and second disk 32A are clamped to respective rotary mechanisms 51 (step S2). Next, the light source 52 is activated to emit light, which is sensed by CCD 53 for accepting an optical transmission image of the first disk 31A (step S3), which is subjected to image processing to thereby detect the exact position of the IC chip 5 (step S4). Next, let another light source 52 to emit light, causing its associated CCD 53 to accommodate a transmission image of the second disk 32A (step S5), followed by execution of image processing to thereby detect the position of the recess 33A (step S6). Position alignment of second disk 32A relative to first disk 31A is performed (step S7). In other words, relative rotational positioning is done to ensure that the position of the IC chip 5 of first disk 31A coincides with the position of the recess 33A of second disk 32A. Then, suction to conveyance arm is carried out while fixing relative positions of the first disk 31A and second disk 32A in a circumferential direction thereof (step S8). After having conveyed to a predetermined position (step S9), the first disk 31A and second disk 32A are bonded together (step S10), thus completing the disk bonding process. Whereby, it is possible to accurately achieve the intended position alignment of the second disk 32A against the first disk 31A.

### «First Modification in Fourth Embodiment»

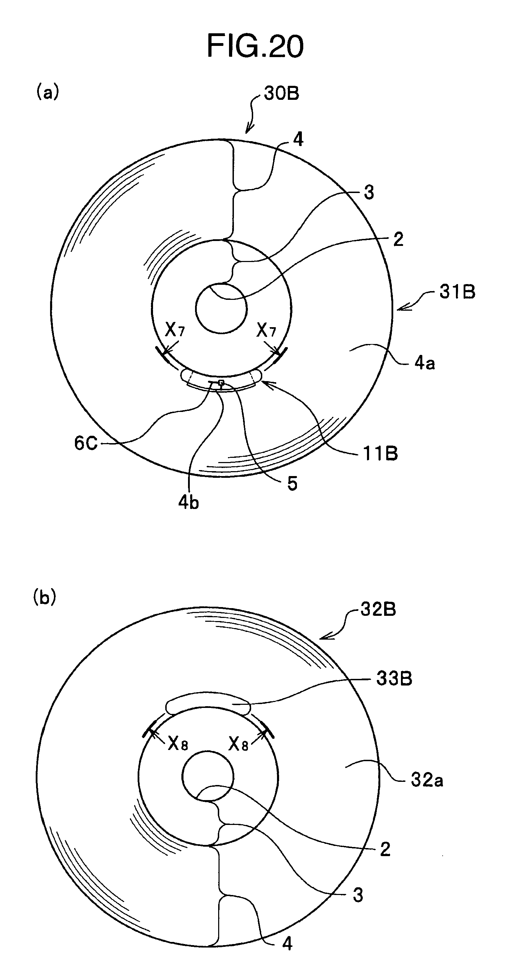

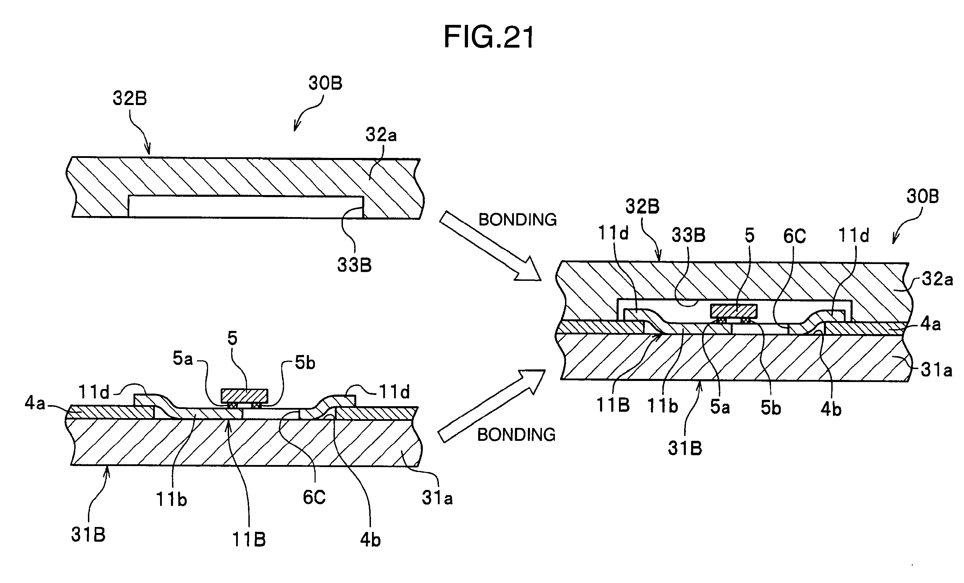

An explanation will next be given of a first modification of this embodiment with reference to Figs. 20 and 21.

Part (a) of Fig. 20 is a top plan view of a first disk 31B prior to bonding to a second disk 32B, and (b) is a bottom view of the second disk 32B prior to bonding to the first disk 31B. Fig. 21 shows an enlarged sectional view along line X₇-X₇ in Fig. 20, an enlarged X₈-X₈ sectional view, and a sectional view after bonding.

As shown in (a) and (b) of Fig. 20, a single-sided DVD 30B of this modification is arranged so that a small-size inlet 11B is adhered to a non-film formation part (metal film layer non-formation portion) 4b with no metal film layer 4a, which is formed in a metal film layer formation region 4 on the surface of a metal film layer 4a of first disk 31B. On the other hand, a recess 33B capable of receiving therein the small-size inlet 11B is defined in the second resin substrate 32a of second disk 32B at a position corresponding to the small-size inlet 11B as mounted on the first disk 31B as shown in Fig. 20(b). Bonding together the first disk 31A and second disk 32A results in achievement of the small-size inlet 11B-mounted single-sided DVD 30B capable of using the metal film layer 4a as the antenna as shown in Fig. 21.

As a result, as shown in Fig. 21, the small-size inlet 11B is equipped at the center part in the thickness direction of the single-sided DVD 30B.

### « Second Modification in Fourth Embodiment»

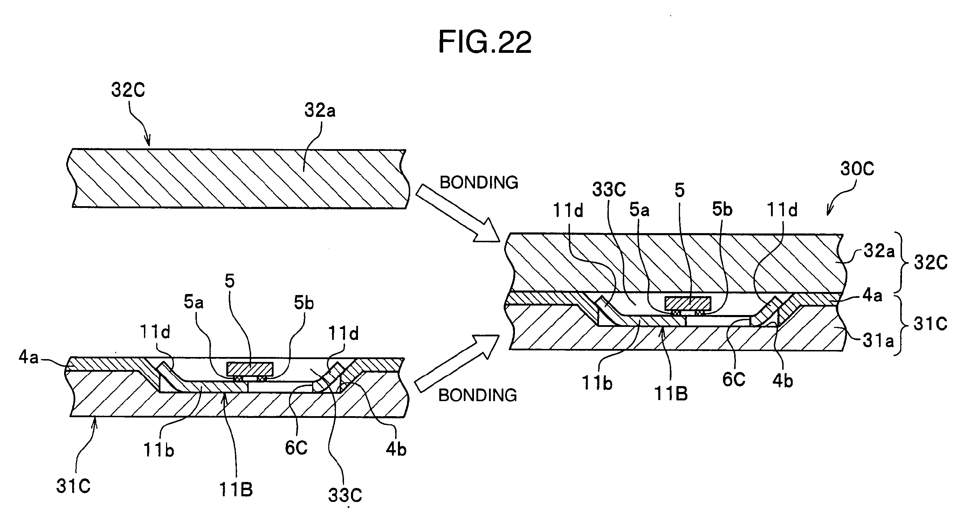

Alternatively, as shown in Fig. 22, after having formed a recess 33C for receiving therein a small-size inlet 11B in first disk 31C, a metal film layer 4a is formed; then, bonding is performed in such a way as to receive the small-size inlet 11B in the recess 33C. In this case, second disk 32C is applied no processing in any way. When bonding together the first and second disks thus arranged, it is possible to realize a single-sided DVD 30C with the small-size inlet 11B mounted thereon, which is capable of using the metal film layer 4a as the antenna required.

Note that although the modification of the fourth embodiment employs the structure that uses the small-size inlet 11B as the arrangement using an inlet, this is not an exclusively limited one. It is also permissible to use the small-size inlet 11A in the second embodiment in the modification of this embodiment also. In such case, by pasting the small-size inlet 11A so that the main body part of small-size inlet 11A resides in the metal film layer non-formation region 3 whereas only the ear end portions span the metal film layer 4a, the intended structure is arrangeable by forming a dimple corresponding to the recess 33B or recess 33C in either the second resin substrate 32a or the first resin substrate 31a in a similar way to the first modification of this embodiment or the second modification thereof.

Additionally, the process of bonding together the single-sided DVD 30B and 30C of the first and second modifications is achievable by using the position alignment device 50 in a similar way to the case of the fourth embodiment.

### «Third Modification of Fourth Embodiment»

Although in the single-sided DVD 30B, 30C stated above the small-size inlet 11A, 11B is mounted at the center part in the thickness direction, this is not to be construed as limiting the invention.

In single-sided DVDs, the metal film layer 4a is usable as the antenna even when letting the small-size antenna 11a or small-size antenna 11b connected to the metal film layer 4a by electrostatic capacitive coupling after having adhered the small-size inlet 11A so that its main body part is placed either on the bottom surface of the first disk having the metal film layer 4a or on the top surface of second disk-i.e., on the protective layer 8 side-or, alternatively, having bonded the small-size inlet 11B at a boundary peripheral portion of the metal film layer formation region 4 relative to the metal film layer non-formation region 3. In this case also, the metal film layer 4a is not provided in a region corresponding to the main body part of the small-size antenna 11b.

### «Effects of Fourth Embodiment and its Modifications»

According to the fourth embodiment and its modifications stated above, it is possible to utilize as the antenna the metal film layer 4a covering a wide range, thereby enabling the IC chip 5 for use as RFID tag or the small-size inlet 11A, 11B to form the intended antenna with enhanced sensitivity. Thus it is possible to provide an extensive read/write area for reader/writer equipment.

In this embodiment and its modifications, the RFID tag is entirely buried within the disk media 30A, 30B so that the planar flatness is superior. In addition, as the RFID tag-forming IC chip 5 or the small-size inlet 11A, 11B is less in area, the disk is excellent in physical strength also.

### «Fifth Embodiment»

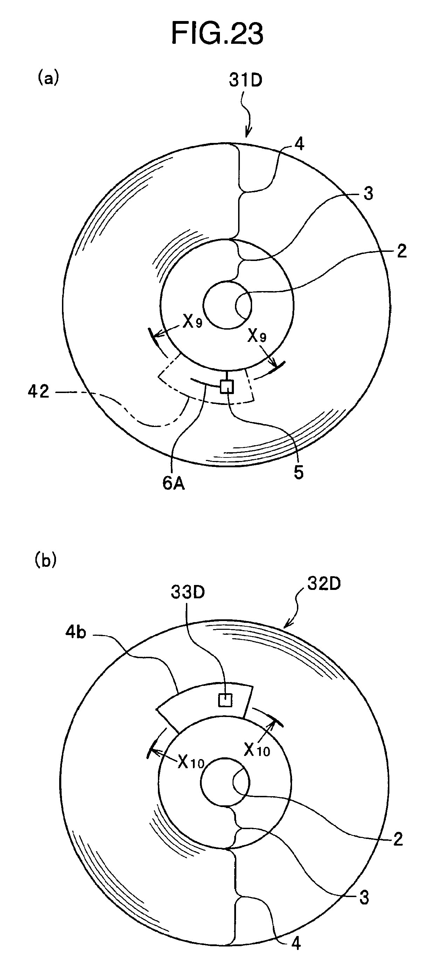

Next, an explanation will be given of a disk media of fifth embodiment with reference to Figs. 23-24.

The disk media of this embodiment is a double-sided DVD 30D having metal film layer formation regions on its both surface while using metal film layers 4a as its antenna. This double-sided DVD 30D is structured from a couple of thin CDs each having a metal film layer formed thereon, which are bonded together while letting the individual resin substrate side be outside and their metal film layer sides oppose each other.

As in the single-sided DVD 30A, the double-sided DVD 30D also is designed so that each disk is 0.6mm thick and a total thickness is 1.2mm, which is the same as that of CD.

Part (a) of Fig. 23 is a top plan view of a first disk 31D prior to bonding to a second disk 32D, and Fig. 23(b) is a bottom view of the second disk 32D prior to bonding to the first disk 31D.

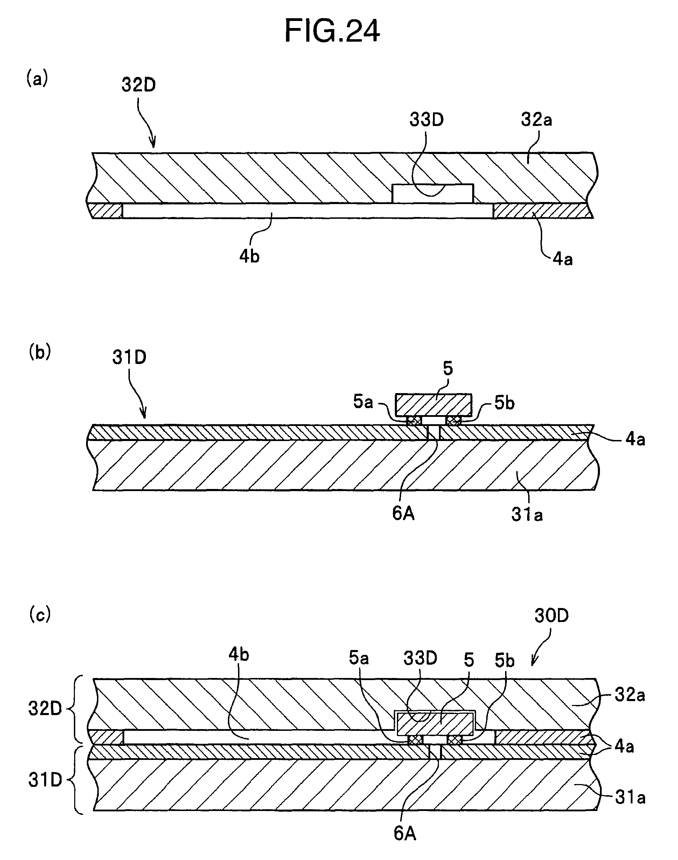

Fig. 24(a) is an enlarged sectional view along line X₁₀-X₁₀ in Fig. 23(a), Fig. 24(b) is an enlarged X₉-X₉ sectional view in Fig. 23(a), and Fig. 24(c) is a sectional view after bonding.

As in the first embodiment, as shown in Fig. 23(a), an L-shaped slit 6A in which no metal film layer 4a is formed is defined at a boundary peripheral portion of the metal film layer formation region 4 with respect to the metal film layer non-formation region 3 of first disk 31D. Then, an IC chip 5 is mounted so that its signal input/output electrodes 5a-5b are electrically connected to the metal film layer 4a while bridging the slit 6A. The L-like slit 6A has a region (referred to hereinafter as impedance matching circuit region) 42 that is necessary to function as an impedance matching circuit, which is indicated as an area enclosed by two-dot dash lines.

On the other hand, as shown in Figs. 23(b) and 24(a), the second disk 32D has at a position corresponding to the IC chip 5 mounted in the metal film layer 4a of the first disk 31D a recess 33D which is formed in second resin substrate 32a and which is sized to enable accommodation of the IC chip 5 while at the same time forming a non-film formation part 4b with its size and position corresponding to the impedance matching circuit region 42 when fabricating the metal film layer 4a on the surface of second resin substrate 32a. When bonding together the first disk 31D and second disk 32D thus structured, it is possible to realize the IC chip 5-mounted double-sided DVD 30D capable of using the metal film layer 4a as an antenna as shown in Fig. 24(c).

The IC chip-mounted double-sided DVD 30D capable of using the metal film layer 4a as the antenna may alternatively be achievable by mounting the IC chip 5 in slit 6A as provided in the surface of second disk 32D while providing the recess 33D and non-film formation part 4b at a corresponding position of the first disk 31D.

### «Modification of Fifth Embodiment»

The fifth embodiment is modifiable so that either the small-size inlet 11A or the small-size inlet 11B is adhered to a surface of the metal film layer 4a of first disk 31D (or second disk 32D) to provide a structure similar to the modification of the fourth embodiment.

For example, in case the small-size inlet 11A of the second embodiment is used, this inlet is adhered to the metal film layer non-formation region 3 in such a manner that the slit 6C which is the main body part of small-size antenna 11a does not span the metal film layer 4a. Then, let the ear end portion(s) of small-size antenna 11a be connected to the metal film layer 4a by electrostatic capacitive coupling via a base film. Further, a recess that is sized to enable accommodation of small-size inlet 11A therein is formed at a position corresponding of the second disk 32D (or first disk 31D).

In the case where the small-size inlet 11B of the third embodiment is used, this inlet is adhered to a non-film formation part (metal film layer non-formation portion) 4b which is formed so that the metal film layer 4a of first disk 31D (or second disk 32D) on the side of adhesion of the small-size inlet 11B is not fabricated therein while preventing the main body part of small-size antenna 11b that includes the slit 6C of small-size inlet 11B from spanning the metal film layer 4a. Then, let the both end portions of small-size antenna 11b be connected to the metal film layer 4a by electrostatic capacitive coupling via a base film. Further, a recess that is sized to enable accommodation of small-size inlet 11B therein is formed at a position corresponding of the second disk 32D (or first disk 31D).

In the case of constitution of the above-noted double-sided DVD 30D shown in Figs. 23-24, the second disk 32D to be bonded to the first disk 31D with the IC chip 5 or the small-size inlet 11A, 11B being mounted thereon for example is arranged so that the impedance matching circuit region 42 of IC chip 5 or the main body part of the small-size antenna 11a, 11b of small-size inlet 11A, 11B does not overlap the metal film layer 4a of second disk 32D. This is in order to avoid unwanted creation of electrostatic capacitance with the metal film layer 4a, thereby enabling the impedance matching circuit region 42 of IC chip 5 or the main body part of the small-size antenna 11a, 11b of small-size inlet 11A, 11B to function as the impedance matching circuitry.

Consequently, in the double-sided DVD 30D with the IC chip 5 or the small-size inlet 11A, 11B being mounted thereon, the position alignment when bonding together the first disk 31D and second disk 32D becomes very important. The position alignment device 50 that has been explained in the fourth embodiment is used to perform, by use of a transmission image(s), reading of the slit shape of first disk 31D or the adhesion position of the small-size inlet 11A, 11B and the shape of the recess 33D of second disk 32D and the position of the non-film formation part 4b, for example. Then, after having aligned two disks in relative position to each other, the first disk 31D and second disk 32D are bonded together.

Although in the fifth embodiment and its modifications the IC chip 5 is adhered onto the metal film layer 4a of one of the couple of disks, the recess 10A and groove 10B may be formed in one-side resin substrate to be bonded while designing the other disk so that the non-film formation part 4b is formed in a region corresponding to the impedance matching circuit region 42 as in the case of the modification of the first embodiment. These disks are then bonded together to provide the intended double-sided DVD.

Alternatively, a double-sided DVD may also be prepared by a process having the steps of forming a recess 33C in the resin substrate of one of two disks as in the second modification of the fourth embodiment, forming thereafter a film while performing masking so that a bottom face of the recess 33C corresponding to the main body of small-size antenna 11a, 11b becomes a non-film formation part (metal film layer non-formation portion) 4b, adhering the small-size inlet 11A, 11B, pasting small-size inlet 11A, 11B, forming for the other disk a non-film formation part 4b in a region corresponding to small-size antenna 11a, 11b, and bonding respective disks together.

### «Effects of Fifth Embodiment and its Modifications»

In accordance with the fifth embodiment and its modification stated supra, it is possible to utilize as the antenna the metal film layer 4a covering a wide range, thereby enabling the IC chip 5 for use as RFID tag or the small-size inlet 11A, 11B to form the intended antenna with enhanced sensitivity. Thus it is possible to provide an extensive read/write area for reader/writer equipment.

In this embodiment and its modification, the RFID tag is entirely buried inside of the disk media 30D so that the planar flatness is good. In addition, as the RFID tag-forming IC chip 5 or the small-size inlet 11A, 11B is less in area, the disk is excellent in physical strength also.

### «Other Modifications of Fifth Embodiment»

Other modified examples of the double-sided DVD will be described.

Although the double-sided DVDs stated above are arranged to employ the small-size inlet 11A, 11B, this is not to be construed as limiting the invention. Any one of the above-stated small-size inlet 11C, 11D, HE and 11F is employable as the small-size inlet therefor.

Also note that although the double-sided DVD 30D stated supra is arranged so that the small-size inlet 11A, 11B is mounted at the center part in the thickness direction, this is not to be construed as limiting the invention.

Even when adhering any one of the small-size inlets 11A-11F to either the bottom surface of first disk or the top surface of second disk-i.e., to a disk surface-at a boundary peripheral portion of the metal film layer formation region 4 with respect to the metal film layer non-formation region 3 to thereby cause its small-size antenna and the metal film layer 4a to be electrostatically capacitively coupled together, it is possible to use the metal film layer 4a as the antenna. In this case also, the metal film layers 4a of the first and second disks are not provided in a region corresponding to the main body part of the small-size antenna.

As apparent from the foregoing, adhering the small-size inlet to the disk surface makes it possible to mount the small-size inlet on, in particular, the presently existing DVD at low costs.

Additionally the small-size inlet may be pasted onto the disk surface by a process having the steps of disposing a protective film on the top surface side of the small-size inlet 11A-11F as stated previously, depositing an adhesive material on the bottom face side of a base film with the IC chip 5 and the small-size antenna 11a, 11b, 11e, 11f mounted thereon, disposing a readily releasable paper to provide a multilayer or "sandwiched" structure, peeling off the release paper, and adhering the inlet so that its terminate end or ends overlap the metal film layer formation region 4. In this case also, when adhering the small-size inlet 11A-11F, position alignment is done to prevent the main body part of small-size antenna 11a, 11b, 11e, 11f including the slit 6C from overlapping the metal film layer 4a of metal film layer formation region 4.

As shown in Fig. 15, the tag-added pasting seal 12 is the one that includes an adhesive material 22 which is deposited on a orie-side surface while causing a round disc-like protective film 26 having a center hole 26a centrally defined therein to be adhered onto a release paper 25 in such a manner as to include the small-size inlet that is laid out on the release paper 25 at a prespecified position with the adhesive material 22 being placed downward. The tag-added pasting seal 12 is the one that includes an adhesive material 22 which is deposited on a one-side surface while causing a round disc-like protective film 26 having a center hole 26a centrally defined therein to be adhered onto a release paper 25 in such a manner as to include the small-size inlet that is laid out on the release paper 25 at a prespecified position with the adhesive material 22 being placed downward (see Fig. 15).

The center hole 26a is the same in diameter as the center hole 2 of target "raw" disk of DVD (the disk media prior to adhesion of the tag-added pasting seal 12) 1La. The prespecified position on the release paper 25 refers to the layout that permits, when the center hole 26a is position-aligned with the center hole 2 of target disk 1La, the terminate end(s) of small-size inlet to overlap the metal film layer formation region 4 while simultaneously preventing the part of slit 6C of small-size antenna 11a, 11b, 11e, 11f from overlapping the metal film layer formation region 4. Then, after having peeled off the release paper 25, the seal is adhered to the target disk 1La after completion of position alignment between the center hole 26a of protective film 26 and the center hole 2 of target DVD disk 1La, whereby it is possible to mount the small-size inlet on the target disk 1La readily and accurately to thereby provide either the single-sided DVD 30A or the double-sided DVD 30B, 30C.

Preferable examples of the metal film layer include, but not limited to, aluminum (Al), silver (Ag), gold (Au), nickel (Ni), chromium (Cr), copper (Cu), Al-Cu alloy, Al-Pd-Cu alloy, and Ag-Pd-Ti alloy-more preferably, Al, Ag or Au-based alloy materials. Setting the thickness of metal film layer to 50nm or more makes it possible to enhance the reflectivity of radio waves. For example, by forming the metal film layer by sputter techniques with high anisotropy, it is possible to form a film to a thickness of about 140nm. Other available approaches to forming the metal film layer are to use vacuum deposition or ink-jet print techniques.

Also note that the protective layer 8 to be formed on the metal film layer 4a is adhesive material so that it is employable for the bonding of a couple disks or discs, such as DVDs, although not specifically discussed in the respective embodiments stated supra. A typical example of such the protective layer material is ultraviolet (UV) ray-hardenable resin, which is deposited by spin coat techniques. For instance, depositing such UV-hardenable resin within a surface area with its radius ranging from 15 to 60mm makes it possible to form a protective layer with its thickness of about 30nm.

Additionally the disk media of each of the embodiments as disclosed herein is modifiable to have a plurality of slits 6A or 6B (i.e., more than two impedance matching circuits) along with a plurality of IC chips 5 of different frequency bands or, alternatively, amount a plurality of small-size inlet 11A-11F. At this time, adjacent ones of these slits are arranged to be different in angle from each other. In other words, a need is felt to arrange these slits so that adjacent ones are not in parallel with each other because of the fact that if adjacent slits are disposed in parallel then mutual interference can occur to weaken radiation of radio waves.

Further note that the first to fifth embodiments or the modifications thereof may also be applied to multilayer structured disk media-e.g., next-generation DVDs with a storage capacity of several tens of gigabytes (GB)-by fabricating as an interlevel layer a metallic thin-film with light transmissivity and then forming in this metal thinfilm a slit(s) as impedance matching circuitry of IC chip(s).

As the disk media incorporating the principles of this invention is able to use the metal film layer per se as the antenna required, it becomes possible to achieve a wide readout range. Accordingly, in the field of mass-storage disk media, it is possible to efficiently manage and handle information of respective disk media. This makes it possible to perform efficient management of disk media, including copy protection.

Although the invention has been described with reference to specific embodiments, the description is illustrative of the invention and is not to be construed as limiting the invention. Various modifications and applications may occur to those skilled in the art without departing from the true spirit and scope of the invention as defined by the appended claims.

## Claims

1. A disk media (1A, 1B, 1C, 1D, 1E, 1F, 1G, 1H, 1K, 1L, 30A, 30B, 30C, 31D) having an IC chip (5) mounted thereon which is rendered operative by radio frequency waves, wherein a metal film layer (4a) formed on said disk media constitutes an antenna of the IC chip (5) and wherein said metal film layer (4a) includes an impedance matching circuit for matching an impedance of said antenna and an impedance of said IC chip (5).

2. The disk media according to claim 1, wherein said impedance matching circuit is formed at a portion of the metal film layer (4a) other than a recording region for storage of information.

3. The disk media according to claim 1, wherein said impedance matching circuit is a slit (6A, 6B, 6C) provided in said metal film layer (4a) for electrical separation of a part of said metal film layer.

4. The disk media according to claim 3, wherein said IC chip (5) has a terminal (5a, 5b) for electrical connection to said antenna, which terminal is connected to said metal film layer (4a) while spanning said slit (6A, 6B, 6C).

5. The disk media according to claim 4, wherein said IC chip (5) is mounted on a surface of said metal film layer (4a).

6. The disk media according to claim 4, wherein said IC chip (5) is mounted on a surface of said metal film layer (4a) as formed at a bottom face of a recess (10A, 10C, 10D) which is provided in a resin substrate (7) that is a base substrate of said metal film layer (4a).

7. The disk media according to claim 6, wherein said metal film layer (4a) is formed by anisotropic deposition from an upper part of said resin substrate (7).

8. The disk media according to claim 6, wherein said resin substrate (7) has a groove (10B) with side faces at least one of which is a vertical wall, wherein said metal film layer (4a) is formed by anisotropic deposition from an upper part of said resin substrate (7), and wherein said vertical wall is formed as said slit (6A, 6B, 6C) by film formation action with linear progressivity due to the anisotropic deposition.

9. The disk media according to claim 4, wherein the terminal of said IC chip (5) is connected to said metal film layer (4a) via an anisotropic conductive film.

10. A disk media (1C, 1D, 1E, 1F, 1G, 1H, 1K, 1L, 30B, 30C) having a built-in IC chip (5) rendered operative by radio waves, wherein a metal film layer (4a) formed on said disk media constitutes an antenna of the IC chip,
wherein a small-size inlet (11A, 11B, 11C, 11D, 11E, 11F) including a small-size antenna (11a, 11b, 11e, 11f) having a slit (6A, 6B, 6C) used for impedance matching with said IC chip (5) is provided at a metal film layer non-formation portion (4b) in which said metal film layer (4a) is absent, and
wherein a predetermined portion of said small-size antenna (11a, 11b, 11e, 11f) is connected to said metal film layer (4a) by any one of electrical interconnection and electrostatic capacitive coupling.

11. The disk media according to claim 10, wherein said small-size antenna (11a, 11b, 11e, 11f) has a length shorter than λ/2, where λ is a wavelength of radio wave to be transmitted or received.

12. The disk media according to claim 10, wherein said metal film layer non-formation portion (4b) is provided at or near a clamp region for clamping the disk media to a disk drive device, and wherein said small-size inlet (11A, 11B, 11C, 11D, 11E, 11F) is mounted on a surface of said metal film layer non-formation portion (4b) or is mounted to be buried in a recess (10A, 10C, 10D) of a resin substrate (7) which is a base substrate of the metal film layer non-formation portion (4b).

13. The disk media according to claim 10, wherein said metal film layer non-formation portion (4b) is partly or entirely provided in a recording area of the disk media and wherein said small-size inlet (11A, 11B, 11C, 11D, 11E, 11F) is mounted on a surface of said metal film layer non-formation portion or is mounted to be buried in a recess (10A, 10C, 10D) of a resin substrate (7) which is a base substrate of the metal film layer non-formation portion.

14. The disk media according to claim 10, wherein when said small-size inlet (11A, 11B, 11C, 11D, 11E, 11F) is electrically connected to said metal film layer (4a) at both ends (11d) thereof, an anisotropic conductive film is interposed between the both ends of said small-size inlet and said metal film layer.

15. The disk media according to claim 1, wherein said disk media is any one of a compact disc (CD) and a digital versatile disk (DVD).

16. A method for manufacturing a disk media having a built-in IC chip (5) rendered operative by radio waves, said method comprising the steps of:
forming a slit (6A, 6B, 6C) for impedance matching with respect to a metal film layer (4a) formed at said disk media;
depositing an anisotropic conductive film on a surface of said metal film layer (4a) corresponding to a position at which said IC chip (5) is mounted while spanning said slit; and
mounting the IC chip (5) while spanning said slit in a way such that an antenna terminal (5a, 5b) of said IC chip is connected at a position at which said anisotropic conductive film is deposited.

17. A method for manufacturing a disk media mounting thereon a small-size inlet (11A, 11B, 11C, 11D, 11E, 11F) including an IC chip (5) and a small-size antenna (11a, 11b, 11e, 11f) having a slit (6A, 6B, 6C) for impedance matching use, said method comprising the steps of:
depositing an anisotropic conductive film at a portion of a metal film layer (4a) formed on said disk media, which portion corresponds to a position for electrical connection with a prespecified part of said small-size antenna; and
disposing a main body part of said small-size inlet at a metal film layer non-formation portion (4b) at which said metal film layer (4a) is absent to thereby connect the prespecified part to a portion at which said anisotropic conductive film is deposited.
